# EUROPEAN PATENT APPLICATION

(11) **EP 4 376 519 A1**
(43) Date of publication of application: **29.05.2024**
(21) Application number: 21950438.8
(22) Date of filing: 20.07.2021
(51) Int. Cl.: H04W 72/04

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); ZUO, Zhisong, Dongguan, Guangdong 523860 (CN); HE, Chuanfeng, Dongguan, Guangdong 523860 (CN); SHAO, Shuai, Dongguan, Guangdong 523860 (CN); HU, Rongyi, Dongguan, Guangdong 523860 (CN); CUI, Shengjiang, Dongguan, Guangdong 523860 (CN); ZHANG, Zhi, Dongguan, Guangdong 523860 (CN)
(74) Representative: Ipside
(86) International application number: PCT/CN2021/107412
(87) International publication number: WO 2023/000173

(57) **Abstract**

A wireless communication method, a terminal device and a network device, which are beneficial for ensuring that the terminal device communicates with the network device by means of a suitable downlink channel and/or uplink channel. The method comprises: a terminal device determining a target downlink channel for receiving a downlink signal, and/or determining a target uplink channel for sending a backscattering signal.

## Description

### TECHNICAL FIELD

Embodiments of the present disclosure relate to the communication field, in particular to a method of wireless communication, a terminal device and a network device.

### BACKGROUND

With the development of science and technology, zero-power terminals are used more and more widely. The zero-power terminals need to harvest radio waves sent by a network device to obtain power before they can drive themselves to work. Therefore, the zero-power terminals are in an "off' state before obtaining the power, that is, the zero-power terminals cannot receive signals sent by the network device at this time. When multiple channels are deployed in a system, the zero-power terminals only support reception of single channel usually because of its simple structure, that is, the zero-power terminal can only send and receive signals on one channel at the same time. In this regard, how the zero-power terminals communicate with the network device is an urgent problem to be solved.

### SUMMARY

The present disclosure provides a method of wireless communication, a terminal device and a network device, which is beneficial to ensure that the terminal device communicates with the network device through a suitable downlink channel and/or an uplink channel.

According to a first aspect of the present disclosure, there is provided a method of wireless communication, which includes that: a terminal device determines a target downlink channel for receiving a downlink signal, and/or determines a target uplink channel for transmitting a back scattering signal.

According to a second aspect of the present disclosure, there is provided a method of wireless communication, which includes that: a network device determines a target downlink channel for transmitting a downlink signal, and/or determines a target uplink channel for receiving a back scattering signal.

According to a third aspect of the present disclosure, there is provided a terminal device, configured to implement the method in the above first aspect or any implementations thereof.

Specifically, the terminal device includes functional modules for implementing the method in the above first aspect or any implementations thereof.

According to a fourth aspect of the present disclosure, there is provided a network device, configured to implement the method in the above second aspect or any implementations thereof.

Specifically, the network device includes functional modules for implementing the method in the above second aspect or any implementations thereof.

According to a fifth aspect of the present disclosure, there is provided a terminal device, including a processor and a memory. The memory is configured to store a computer program, and the processor is configured to call and execute the computer program stored in the memory to implement the above method of the first aspect or any implementations thereof.

According to a sixth aspect of the present disclosure, there is provided a network device, including a processor and a memory. The memory is configured to store a computer program, and the processor is configured to call and execute the computer program stored in the memory to implement the above method of the second aspect or any implementations thereof.

According to a seventh aspect of the present disclosure, there is provided a chip, configured to implement the method in any of the first aspect to second aspect or implementations thereof.

Specifically, the chip includes a processor, which is configured to call and execute a computer program from a memory to cause a device equipped with the apparatus to implement the method in any of the first aspect to second aspect or any implementations thereof.

According to an eighth aspect of the present disclosure, there is provided a computer-readable storage medium, configured to store a computer program that causes a computer to implement the method in any of the first aspect to second aspect or any implementations thereof.

According to a ninth aspect of the present disclosure, there is provided a computer program product, including computer program instructions that cause a computer to implement the method in any of the first aspect to second aspect or any implementations thereof.

According to a tenth aspect of the present disclosure, there is provided a computer program that, when running on a computer, causes a computer to implement the method in any of the first aspect to second aspect or any implementations thereof.

Through the above technical solution, the terminal device can determine the target downlink channel for receiving the downlink signal and/or the target uplink channel for transmitting the back scattering signal, and correspondingly, the network device can also determine the target downlink channel for transmitting the downlink signal and/or the target uplink channel for receiving the back scattering signal, which is beneficial to ensure that the terminal device communicates with the network device through the suitable downlink channel and/or the uplink channel.

### BRIEF DESCRIPTION OF THE DRAWINGS

FIG. 1 is a schematic diagram of a communication system architecture provided by an embodiment of the present disclosure.
FIG. 2 is a schematic diagram of a zero-power communication system according to an example of the present disclosure.
FIG. 3 is a principle diagram of power harvesting.
FIG. 4 is a principle diagram of back scattering communication.
FIG. 5 is a circuit principle diagram of resistance load modulation.
FIG. 6 is a schematic flowchart of a method of wireless communication according to an embodiment of the present disclosure.
FIG. 7 is a diagram of a location relationship between a target downlink channel and a downlink channel corresponding to a first downlink signal.
FIG. 8 is a schematic diagram of another location relationship between a target downlink channel and a downlink channel corresponding to a first downlink signal.
FIG. 9 is a schematic diagram of deployment of an uplink channel according to an embodiment of the present disclosure.
FIG. 10 is a schematic diagram of deployment of an uplink channel according to another embodiment of the present disclosure.
FIG. 11 is a schematic diagram of a location relationship between a target uplink channel and a target downlink channel.
FIG. 12 is a schematic diagram of another location relationship between a target uplink channel and a target downlink channel.
FIG. 13 is a schematic diagram of a location relationship between a target uplink channel and a downlink channel corresponding to a first downlink signal.
FIG. 14 is a schematic diagram of another location relationship between a target uplink channel and a downlink channel corresponding to a first downlink signal.
FIG. 15 is a schematic flowchart of another method of wireless communication according to an embodiment of the present disclosure.
FIG. 16 is a schematic flowchart of a deployment method of an uplink channel according to an embodiment of the present disclosure.
FIG. 17 is a schematic block diagram of a terminal device provided by an embodiment of the present disclosure.
FIG. 18 is a schematic block diagram of a network device provided by an embodiment of the present disclosure.
FIG. 19 is a schematic block diagram of a communication device provided by an embodiment of the present disclosure.
FIG. 20 is a schematic block diagram of a chip provided by an embodiment of the present disclosure.
FIG. 21 is a schematic block diagram of a communication system provided by an embodiment of the present disclosure.

### DETAILED DESCRIPTION

The technical solution of the embodiments of the present disclosure will be described below in conjunction with the drawings in the embodiments of the present disclosure, and it will be apparent that the described embodiments are part of the embodiments of the present disclosure, but not all of them. Based on the embodiments in the present disclosure, all other embodiments obtained by those skilled in the art without making creative efforts fall within the scope of protection of the present disclosure.

The technical solution of the embodiments of the present disclosure may be applied to various communication systems. For example, a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of NR system, a LTE-based access to unlicensed spectrum (LTE-U) system, an NR-based access to unlicensed spectrum (NR-U) system, a non-terrestrial networks (NTN) system, an universal mobile telecommunication system (UMTS), a wireless local area network (WLAN), a wireless fidelity (WiFi), a 5th-generation (5G) communication system, a cellular Internet of Things (Iot) systems, a cellular passive Iot system or other communication systems.

Generally speaking, conventional communication systems support a limited number of connections and are easy to implement. However, with the development of communication technology, mobile communication systems will not only support conventional communication, but also support, for example, a device to device (D2D) communication, a machine to machine (M2M) communication, a machine type communication (MTC), a vehicle to vehicle (V2V) communication, a vehicle to everything (V2X), etc. Embodiments of the present disclosure may also be applied to these communication systems.

Optionally, the communication system in the embodiments of the present disclosure may be applied to a carrier aggregation (CA) scenario, a dual connectivity (DC) scenario, and a standalone (SA) network distribution scenario.

Optionally, the communication system in the embodiments of the present disclosure may be applied to unlicensed spectrum, where the unlicensed spectrum may also be considered as shared spectrum. Optionally, the communication system in the embodiments of the present disclosure may also be applied to licensed spectrum, where the licensed spectrum may also be considered as non-shared spectrum.

Embodiments of the present disclosure are described in connection with a network device and a terminal device. The terminal device may be referred to as user equipment (UE), an access terminal, a subscriber unit, a subscriber station, a mobile station, a mobile platform, a remote station, a remote terminal, a mobile device, a user terminal, a terminal, a wireless communication device, a user agent, or a user device.

In embodiments of the present disclosure, the network device may be a device for communicating with a mobile device, and the network device may be an access point (AP) in WLAN, a base transceiver station (BTS) in GSM or CDMA, a base station (NodeB, NB) in WCDMA, an evolutional node B (eNB or eNodeB) in LTE, a relay station or an access point, or an in-vehicle device, a wearable device, a network device (gNB) in NR network, a network device of an ellular Iot system, a network device of a cellular passive Iot system, a network device in future evolved PLMN network or a network device in NTN network, etc.

By way of example and not limitation, in the embodiments of the present disclosure, the network device may have mobility characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device may also be a base station arranged on land, water or the like.

In the embodiments of the present disclosure, the network device may provide services for a cell, the terminal device communicates with the network device through transmission resources (e.g. frequency domain resources, or spectrum resources) used by the cell, the cell may be a cell corresponding to a network device (e.g. a base station), the cell may belong to a macro base station or a base station corresponding to a small cell. The small cell may include a metro cell, a micro cell, a pico cell, a femto cell, etc. These small cells have the characteristics of small coverage and low transmission power, and are suitable for providing high-speed data transmission services.

The terminal device may be a station (ST) in the WLAN, or it may be a cellular phone, a cordless phone, a session initiation protocol (SIP) telephone, a wireless local loop (WLL) station, a personal digital assistant (PDA) device, a handheld device with wireless communication function, a computing device or other processing device connected to wireless modem, an in-vehicle device, a wearable device, a next-generation communication system such as a terminal device in an NR network, or a terminal device in the future evolved public land mobile network (PLMN) network, a terminal device in a cellular Iot system, a terminal device in a cellular passive Iot system, etc.

In the embodiments of the present disclosure, the terminal device may be deployed on land, including indoor or outdoor, hand-held, wearable or in-vehicle. The terminal device may also be deployed on the water (such as on ships, etc.). The terminal device may also be deployed in the air, such as on airplanes, balloons and satellites, etc.

In the embodiments of the present disclosure, the terminal device may be a mobile phone, a pad, a computer with wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city or smart home, etc.

By way of example and not limitation, in the embodiments of the present disclosure, the terminal device may also be a wearable device. The wearable device may also be called wearable intelligent device, which is a general name of wearable devices developed by applying wearable technology to intelligently design daily wear, such as glasses, gloves, watches, clothing and shoes. The wearable device is a portable device that is worn directly on the body or integrated into the user's clothes or accessories. The wearable device is not only a kind of hardware device, but also realizes powerful functions through software support, data interaction and cloud interaction. Generalized wearable intelligent devices include full functions and large size, which may realize complete or partial functions without relying on smart phones, such as smart watches or smart glasses, and only focus on certain application functions, and the wearable intelligent devices need to be used in conjunction with other devices such as smart phones, such as various smart bracelets and smart jewelry for monitoring physical signs.

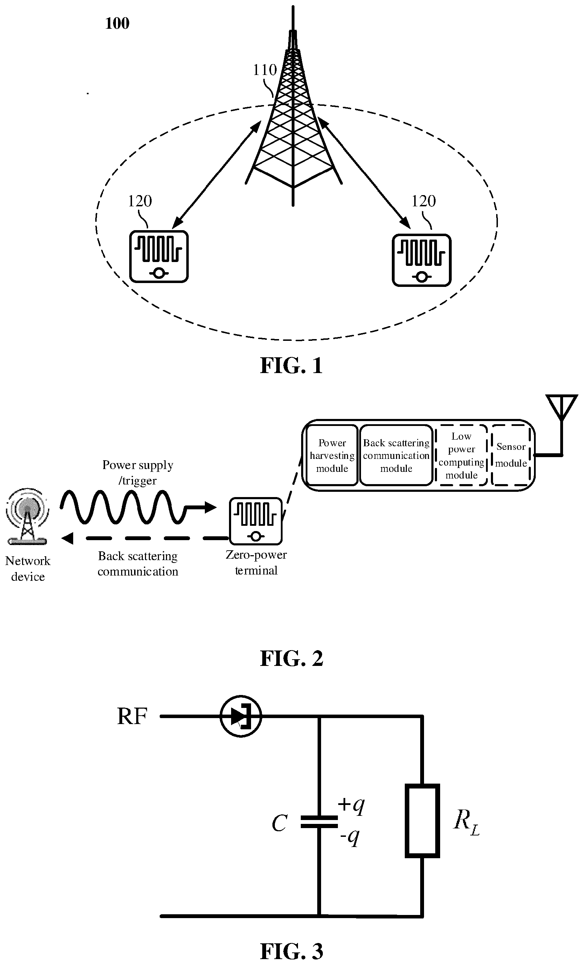

Exemplarily, a communication system 100 applied in the embodiments of the present disclosure is illustrated in FIG. 1. The communication system 100 may include a network device 110, which may be a device that communicates with terminal devices 120 (or referred to as communication terminals or terminals). The network device 110 may provide communication coverage for a specific geographic area and may communicate with terminal devices located within the coverage area.

FIG. 1 exemplarily illustrates one network device and two terminal devices. Optionally, the communication system 100 may include multiple network devices and other numbers of terminal devices may be included within the coverage of each network device, which is not limited by embodiments of the present disclosure.

Optionally, the communication system 100 may also include other network entities such as network controllers, mobility management entities and the like, which are not limited by the embodiments of the present disclosure.

It should be understood that a device having a communication function in a network/system in the embodiments of the present disclosure may be referred to as a communication device. Taking the communication system 100 illustrated in FIG. 1 as an example, the communication device may include a network device 110 and terminal devices 120 having a communication function, the network device 110 and the terminal devices 120 may be specific devices described above and will not be described here. The communication device may also include other devices in the communication system 100 such as network controllers, mobility management entities and other network entities, which are not limited in the embodiments of the present disclosure.

It should be understood that the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects.

It should be understood that the "indicate" mentioned in embodiments of the present disclosure may be a direct indication, may be an indirect indication, or may indicate an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B.

In the description of embodiments of the present disclosure, the term "correspond" may mean that there is a direct correspondence or an indirect correspondence relationship between the two, or may also mean that there is an association relationship between the two, or may also be a relationship between indication and being indicated, configuration and being configured, etc.

In the embodiments of the present disclosure, the "predefined" may be implemented by pre-storing corresponding codes, tables, or other manners that may be used to indicate relevant information in devices (e.g., including terminal devices and network devices), the specific implementation of which is not limited by the present disclosure. For example, predefined may refer to what is defined in the protocol.

In the embodiments of the present disclosure, the "protocol" may refer to standard protocols in the communication field, such as an LTE protocol, an NR protocol, and related protocols applied in future communication systems, which are not limited herein.

In order to facilitate understanding of the technical solution of the embodiments of the present disclosure, related technologies of the present disclosure are explained below.

First, zero-power communication is as follows.

In the zero-power communication, power harvesting technology and back scattering communication technology are adopted. A zero-power communication network consists of a network device and a zero-power terminal.

As illustrated in FIG. 2, the network device is used to transmit wireless power sourcing signals and downlink communication signals, and receive back scattering signals from the zero-power terminal. A basic zero-power terminal includes a power harvesting module, a back scattering communication module and a low-power calculation module. In addition, the zero-power terminal may also have a memory or a sensor for storing some basic information (such as article identification, etc.) or obtaining sensing data such as ambient temperature and ambient humidity.

Key technologies in zero-power communication will be explained as follows.

### 1. Radio frequency (RF) Power Harvesting

As illustrated in FIG. 3, the RF power harvesting module harvests space electromagnetic wave power based on the principle of electromagnetic induction, and then obtains the power needed to drive the zero-power terminal, such as driving the low-power demodulation and modulation module, sensors and memory reading. Therefore, the zero-power terminal does not need a conventional battery.

### 2. Back Scattering

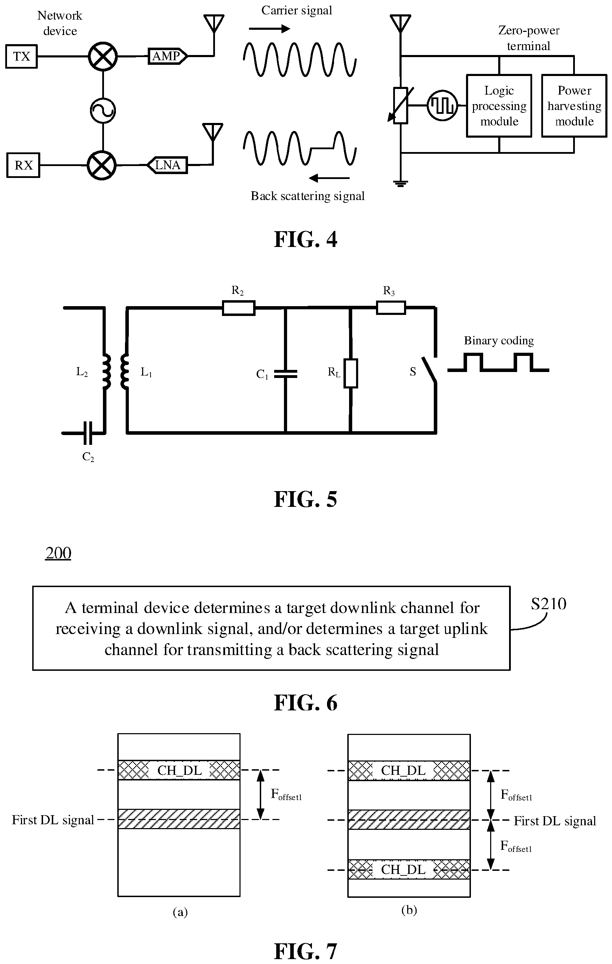

As illustrated in FIG. 4, the zero-power terminal receives a wireless signal sent by the network device, modulates the wireless signal, loads the information to be sent and radiates the modulated signal from the antenna. Such information transmission process is called the back scattering communication. The back scattering and the load modulation are inseparable. By adjusting and controlling circuit parameters of an oscillation loop of the zero-power terminal according to a beat of the data stream, the load modulation makes the parameters such as an impedance of the electronic tag change accordingly, thus completing the modulation process. Load modulation technology mainly includes resistance load modulation and capacitance load modulation. In the resistance load modulation, the load is connected in parallel with a resistor that is turned on or off based on control of a binary data stream as illustrated in FIG. 5. When the resistor is on or off, a circuit voltage will change, so an amplitude shift keying (ASK) modulation is realized, that is, the signal modulation and transmission are realized by adjusting the amplitude of back scattering signal of zero-power terminal. Similarly, in the capacitance load modulation, a resonant frequency of the circuit may be changed by switching the capacitor on and off, and a frequency shift keying (FSK) modulation is thus realized, that is, the signal modulation and transmission are realized by adjusting an operating frequency of the back scattering signal of the zero-power terminal.

It can be seen that the zero-power terminal modulates an incoming signal by means of the load modulation, thus realizing the back scattering communication process. Therefore, zero-power terminals have significant advantages:
(1) The terminal does not transmit signals actively, so there is no need for complex RF links, such as PA, RF filters, etc.;
(2) The terminal does not need to generate high-frequency signals actively, so there is no need for high-frequency crystal oscillators;
(3) With the help of back scattering communication, the terminal does not need to consume its own power for signal transmission. 2. RF Power Harvesting.

### 3. Coding technology

For data transmitted by electronic tags, different forms of codes may be used to represent binary "1" and "0". Radio frequency identification (RFID) systems usually use one of the following coding methods: a reverse non-return-to-zero (NRZ) coding, a Manchester encoding, an Unipolar return-to-zero (RZ) coding, a differential binary phase (DBP) coding, a differential coding, a pulse interval encoding (PIE), a Bi-phase space coding (FM0), a Miller coding and a differential coding, etc. Generally speaking, different pulse signals are used to represent 0 and 1.

In some scenarios, zero-power terminals may include the following types of terminals based on a power source and usage of zero-power terminals:

### 1. Passive zero-power terminal

The zero-power terminal does not need a built-in battery. When the zero-power terminal approaches the network device (such as a reader of RFID system), the zero-power terminal is in a near-field range formed by antenna radiations of the network device. Therefore, antennas of the zero-power terminal generate an induced current through electromagnetic induction, and the induced current drives a low-power chip circuit of the zero-power terminal, so that demodulation of a forward link signal and modulation of a reverse link signal are realized. For the back scattering link, the zero-power terminal performs signal transmission through the back scattering.

It can be seen that the passive zero-power terminal does not need built-in battery to drive either a forward link or a reverse link, so it is a true zero-power terminal.

The passive zero-power terminal does not need batteries, and its RF circuit and baseband circuit are very simple, for example, there is no need for a low noise amplifier (LNA), a power amplifier (PA), a crystal oscillator, an Analog-to-Digital Converter (ADC) and other devices, so it has many advantages such as small size, light weight, very cheap price and long service life.

### 2. Semi-passive zero-power terminal

The semi-passive zero-power terminal itself is not equipped with conventional batteries, but can use an RF power harvesting module to harvest radio wave power and store the harvested power in an power storage unit (such as a capacitor). After the power storage unit obtains power, it may drive the low-power chip circuit of the zero-power terminal, so that demodulation of a forward link signal and modulation of a reverse link signal are realized. For the back scattering link, the zero-power terminal performs signal transmission through the back scattering.

It can be seen that the semi-passive zero-power terminal does not need built-in battery to drive either a forward link or a reverse link. Although the power stored by capacitors is used in the operation, the power comes from the radio power harvested by the power harvesting module, so it is also a true zero-power terminal.

The semi-passive zero-power terminal inherits many advantages of the passive zero-power terminal, so it has many advantages such as small size, light weight, very cheap price and long service life.

### 3. Active zero-power terminal

The zero-power terminal used in some scenarios may also be an active zero-power terminal, and such terminals may have built-in batteries. The batteries are used to drive the low-power chip circuit of the zero-power terminal, so that demodulation of a forward link signal and modulation of a reverse link signal are realized. But for the back scattering link, the zero-power terminal performs signal transmission through the back scattering. Therefore, the zero-power of such terminals is mainly reflected in the fact that the signal transmission in the reverse link does not need the power of the terminal itself, but uses the back scattering.

Second, the cellular passive Internet of Things (IoT) is as follows.

With the increasing application of 5G industry, there are more and more types and application scenarios of connectors, and there will be higher requirements for the cost and power consumption of communication terminals. The application of battery-free and low-cost passive IoT devices has become the key technology of cellular IoT, and the types and the number of 5G network link terminals are enriched, thereby truly realizing the Internet of Everything. The passive IoT devices may be based on zero-power communication technology, such as RFID technology, and extended on this basis to be suitable for cellular IoT.

The zero-power terminals need to harvest radio waves sent by a network device to obtain power before they can drive themselves to work. Therefore, the zero-power terminals are in an "off' state before obtaining the power, that is, the zero-power terminals cannot receive signals sent by the network device at this time. Thus, when multiple channels are deployed in a system, the zero-power terminal only supports reception of single channel usually because of its simple structure, that is, the zero-power terminal can only send and receive signals on one channel at the same time. How the zero-power terminals communicate with the network device is an urgent problem to be solved.

The technical solution of the present disclosure will be described in detail by specific embodiments below. The above related technologies may be combined with the technical solution of the embodiments of the present disclosure arbitrarily as optional solutions, all of which belong to the protection scope of the embodiments of the present disclosure. Embodiments of the present disclosure include at least some of the following.

FIG. 6 is a schematic interaction diagram of a method of wireless communication 200 according to an embodiment of the present disclosure. As illustrated in FIG. 6, the method 200 includes of the following operation.

At block S210, a terminal device determines a target downlink channel for receiving a downlink signal, and/or determines a target uplink channel for transmitting a back scattering signal.

In embodiments of the present disclosure, the terminal device is a device that does not transmit signals actively but uses signals sent by network devices or other devices to carry information. For example, the terminal device is a zero-power terminal.

It should be understood that embodiments of the present disclosure may be applied to cellular IoT systems, such as cellular passive IoT systems, or to other scenarios where terminal devices transmit information to network devices through a manner of zero-power communication or battery-free communication, and the present disclosure is not limited thereto.

It should be noted that the manner of zero-power communication may include a manner of back scattering communication, or may include other manners introduced in the standard evolution for communication by a zero-power terminal. The following will be described taking an example that a terminal device communicates with a network device by the manner of back scattering, but the present disclosure is not limited thereto.

In the embodiments of the present disclosure, the capability acquisition module of the terminal device may support broadband reception, that is, the terminal device may receive wireless signals and perform power harvesting in a relatively wide bandwidth range. In this way, once the network device transmits downlink signals within the bandwidth range supported by the terminal device, the terminal device performs power harvesting to obtain power, and activates the chip circuit inside the terminal device based on the obtained power to enter an "active" state.

In some embodiments, after entering the "active" state, the terminal device may receive a downlink signal (or referred to as a forward link signal) sent by the network device, and the channel bandwidth for data communication by the terminal device is limited generally, for example, the channel bandwidth is 200 KHz. When the network device is deployed with multiple downlink channels, the terminal device needs to determine the target downlink channel for receiving downlink signals, so as to receive the downlink signals sent by the network device and obtain the downlink information sent by the network device.

In some embodiments, the target downlink channel may be an initial downlink channel for receiving downlink signals during the initial connection between the terminal device and the network device, or the target downlink channel may be a downlink channel after the initial connection is established, which is used for receiving downlink signals after the connection between the terminal device and the network device is established.

By way of example and not limitation, the downlink signal may include at least one of:
a synchronization signal for synchronization between terminal device and network device;
a data signal for carrying data information;
a signal source for generating a back scattering signal; and
a control signal for carrying a control signaling.

In some embodiments, the signal source for generating the back scattering signal may refer to an unmodulated signal, such as a sine wave, a square wave, a triangular wave, a pulse or a rectangular wave.

In other embodiments, the data signal may also serve as a signal source for the back scattering signal.

In yet other embodiments, the control signal may also serve as a signal source for the back scattering signal.

That is, the terminal device may generate the back scattering signal based on the unmodulated signal, the data signal or the control signal, and the embodiments of the present disclosure do not make specific limitations to the signal source for generating the back scattering signal.

In some embodiments of the present disclosure, the terminal device may receive signals on a plurality of candidate downlink channels, and determine a target downlink channel used by the network device to transmit the downlink signal according to characteristics of the received signals.

For example, a terminal device attempts to receive signals on a plurality of candidate downlink channels and determines whether the network device has transmitted a downlink signal based on characteristics of the received signals (e.g. a specific signal coding sequence). Optionally, center frequency points and/or channel bandwidths of the plurality of candidate downlink channels are different.

In other embodiments of the present disclosure, the terminal device may also determine that a specific downlink channel is a target downlink channel for receiving a downlink signal. Correspondingly, the network device may transmit the downlink signal on the specific downlink channel, that is, the terminal device and the network device have the same understanding for the frequency location of the downlink signal, so that the normal communication between the terminal device and the network device can be realized.

In some embodiments, the terminal device may determine a target downlink channel for receiving the downlink signal according to a preset rule, and correspondingly, the network device may also determine a target downlink channel for transmitting the downlink signal according to the preset rule. Further, the network device transmits the downlink signal on the target downlink channel, and the terminal device receives the downlink signal on the target downlink channel, thereby ensuring normal communication between the terminal device and the network device.

In other embodiments, the terminal device may determine the frequency location of the target downlink channel based on the downlink signaling of the network device. Further, the network device transmits a downlink signal on the target downlink channel indicated by the downlink signaling, and the terminal device receives the downlink signal on the target downlink channel, thereby ensuring normal communication between the terminal device and the network device.

In some embodiments, the terminal device may determine the target downlink channel for receiving the downlink signal according to at least one of:
a downlink channel corresponding to a first downlink signal, where the first downlink signal is used for supplying power to the terminal device;
an operating frequency band for the terminal device;
predefined information; or
a downlink signaling sent by the network device.

In the embodiments of the present disclosure, the first downlink signal is used to supply power to the terminal device, that is, the first downlink signal may be a power sourcing signal for the terminal device.

In some embodiments, the first downlink signal may also be a signal source for generating a back scattering signal. For example, the terminal device may modulate the first downlink signal to obtain the back scattering signal.

The determination of the target downlink channel will be described respectively below in connection with specific embodiments.

Embodiment 1: a target downlink channel is determined according to a downlink channel corresponding to the first downlink signal.

In other words, the terminal device may determine a frequency location of the target downlink channel based on a frequency location of the first downlink signal.

In some embodiments, the operation that the terminal device determines the target downlink channel according to the downlink channel corresponding to the first downlink signal may include that:
a center frequency point of the target downlink channel is determined according to a center frequency point of the downlink channel corresponding to the first downlink signal; and/or,
a channel bandwidth of the target downlink channel is determined according to a channel bandwidth of the downlink channel corresponding to the first downlink signal.

Optionally, when the target downlink channel is an initial downlink channel, the terminal device may determine the frequency location of the target downlink channel according to the frequency location of the downlink channel corresponding to the first downlink signal.

Optionally, when the target downlink channel is a downlink channel after the initial connection is established, the terminal device may determine the frequency location of the target downlink channel according to the frequency location of the downlink channel corresponding to the first downlink signal.

The location relationship between the target downlink channel and the downlink channel corresponding to the first downlink signal will be described below with reference to embodiment 1-1 and embodiment 1-2. The target downlink channel and the downlink channel corresponding to the first downlink signal may have other location relationships, and the present disclosure is not limited thereto.

Embodiment 1-1: the target downlink channel is the same as a downlink channel corresponding to the first downlink signal.

In some embodiments, the target downlink channel being the same as the downlink channel corresponding to the first downlink signal includes that:
a center frequency point of the target downlink channel is the same as a center frequency point of the downlink channel corresponding to the first downlink signal.

In this case, a channel bandwidth of the target downlink channel may be predefined, or configured by the network device.

For example, if the target downlink channel is an initial downlink channel, a channel bandwidth of the initial downlink channel may be determined according to predefined information.

For another example, if the target downlink channel is a downlink channel after the initial connection is established, in this case, a channel bandwidth of the target downlink channel may be determined according to predefined information or the downlink signaling of the network device.

In some embodiments, the target downlink channel being the same as the downlink channel corresponding to the first downlink signal includes that:
a channel number of the target downlink channel is the same as a channel number of the downlink channel corresponding to the first downlink signal.

For example, a plurality of downlink channels are predefined, each downlink channel corresponds to a respective center frequency point and a respective channel bandwidth, and each downlink channel is identified by a channel number. The channel number of the target downlink channel being the same as the channel number of the downlink channel corresponding to the first downlink signal may mean that the terminal device may determine the downlink channel corresponding to the first downlink signal as the target downlink channel.

It should be noted that the embodiments of the present disclosure are illustrated only by identifying the downlink channels with the channel numbers as an example. In other embodiments, the downlink channels may also be identified by other identification information, and the present disclosure is not limited thereto.

In other embodiments, the target downlink channel being the same as the downlink channel corresponding to the first downlink signal includes that:
a center frequency point of the target downlink channel is the same as a center frequency point of the downlink channel corresponding to the first downlink signal, and
a channel bandwidth of the target downlink channel is the same as a channel bandwidth of the downlink channel corresponding to the first downlink signal.

That is, the terminal device may determine the downlink channel corresponding to the first downlink signal as the target downlink channel.

To sum up, the terminal device may determine the center frequency point of the downlink channel corresponding to the first downlink signal as the center frequency point of the target downlink channel, and determine the channel bandwidth of the target downlink channel according to the predefined information, or the downlink signaling of the network device, or the channel bandwidth of the downlink channel corresponding to the first downlink signal.

Embodiment 1-2: a first frequency gap is provided between the target downlink channel and the downlink channel corresponding to the first downlink signal.

In some embodiments, the first frequency gap being provided between the target downlink channel and the downlink channel corresponding to the first downlink signal includes that: the first frequency gap is provided between a center frequency point of the target downlink channel and a center frequency point of the downlink channel corresponding to the first downlink signal.

In some embodiments, the first frequency gap being provided between the center frequency point of the target downlink channel and the center frequency point of the downlink channel corresponding to the first downlink signal may mean that:

a difference between the center frequency point of the target downlink channel (denoted by CH_DL) and the center frequency point of the downlink channel corresponding to the first downlink signal is the first frequency gap (denoted as F_{offset1}), as illustrated in (a) of FIG. 7.

In other embodiments, the first frequency gap being provided between the center frequency point of the target downlink channel and the center frequency point of the downlink channel corresponding to the first downlink signal may mean that:

an absolute value of the difference between the center frequency point of the target downlink channel (denoted as CH_DL) and the center frequency point of the downlink channel corresponding to the first downlink signal is the first frequency gap (denoted as F_{offset1}), as illustrated in (b) of FIG. 7.

In some embodiments, the first frequency gap is configured by the network device or predefined.

As an example, the first frequency gap is configured by the network device through the first downlink signal. For example, the network device may modulate the first downlink signal to carry information of the first frequency gap.

In some embodiments, if a first frequency gap is provided between each of a plurality of downlink channels and the downlink channel corresponding to the first downlink signal, the terminal device may select any one of the plurality of downlink channels as a target downlink channel. Optionally, the plurality of downlink channels may be searched to determine the target downlink channel for receiving the downlink signal. For example, the terminal device may determine which of the plurality of downlink channels the network device transmits the downlink signal on according to the characteristics of the signals received on the plurality of downlink channels, and further take the downlink channel on which the network device transmits the downlink signal as the target downlink channel.

Embodiment 1-3: a first channel number offset is provided between a channel number of the target downlink channel and a channel number of the downlink channel corresponding to the first downlink signal.

In some embodiments, a plurality of downlink channels are predefined, each downlink channel corresponds to a respective center frequency point and a respective channel bandwidth, and each downlink channel is identified by a channel number.

In some embodiments, the first channel number offset being provided between the channel number of the target downlink channel and the channel number of the downlink channel corresponding to the first downlink signal may mean that:

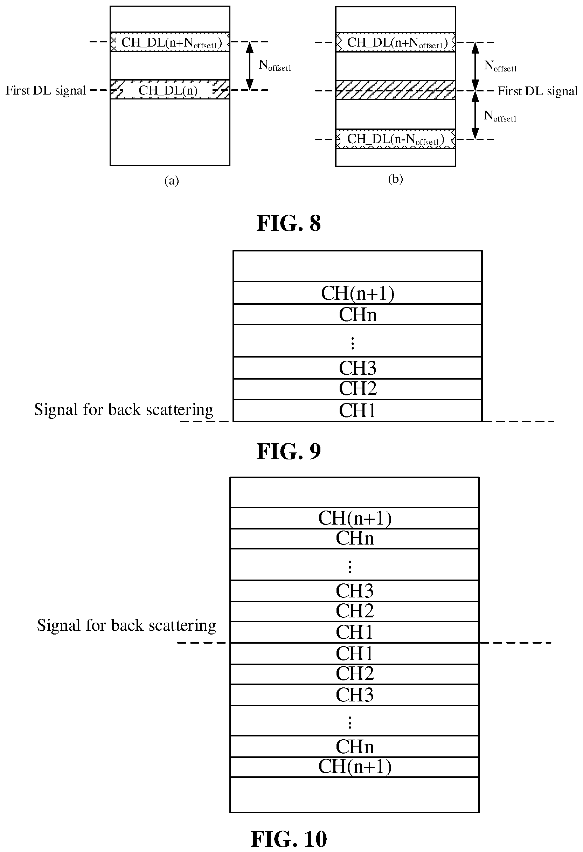

a difference between the channel number of the target downlink channel (CH_DL (n+ N_{offset1})) and the channel number of the downlink channel (CH_DL (n)) corresponding to the first downlink signal is the first channel number offset (denoted as N_{offset1}), as illustrated in (a) of FIG. 8.

In other embodiments, the first channel number offset being provided between the channel number of the target downlink channel and the channel number of the downlink channel corresponding to the first downlink signal may mean that:
an absolute value of the difference between the channel number of the target downlink channel (CH_DL (n-N_{offset1}) and CH_DL (n+ N_{offset1}), respectively) and the channel number of the downlink channel (CH_DL (n)) corresponding to the first downlink signal is the first channel number offset (denoted as N_{offset1}), as illustrated in (b) of FIG. 8.

In some embodiments, the first channel number offset is configured by the network device or predefined.

As an example, the first channel number offset is configured by the network device through the first downlink signal. For example, the network device may modulate the first downlink signal to carry the information of the first channel number offset.

In some embodiments, if there are a plurality of downlink channels that have a first channel number offset with the downlink channel corresponding to the first downlink signal, the terminal device may select any one of the plurality of downlink channels as a target downlink channel. Optionally, the plurality of downlink channels may be searched to determine the target downlink channel for receiving the downlink signal. For example, the terminal device may determine which of the plurality of downlink channels the network device transmits the downlink signal on according to the characteristics of the signals received on the plurality of downlink channels, and further take the downlink channel on which the network device transmits the downlink signal as the target downlink channel.

Embodiment 2: the frequency location of the target downlink channel is determined according to an operating frequency band of the terminal device.

Optionally, when the target downlink channel is an initial downlink channel, the terminal device may determine the frequency location of the target downlink channel according to the operating frequency band of the terminal device.

Optionally, when the target downlink channel is a downlink channel after the initial connection is established, the terminal device may determine the frequency location of the target downlink channel according to the operating frequency band of the terminal device.

In some embodiments, the terminal device may determine a downlink channel corresponding to a center frequency point of an operating frequency band of the terminal device as the target downlink channel.

For example, the network device is deployed with a plurality of downlink channels, each of which corresponds to a respective center frequency point and a respective channel bandwidth. If the center frequency point of the operating frequency band of the terminal device falls into a first downlink channel in the plurality of downlink channels, the first downlink channel may be determined as the target downlink channel. That is, the center frequency point and the channel bandwidth of the first downlink channel may be determined as the center frequency point and the channel bandwidth of the target downlink channel.

In other embodiments, the terminal device may determine the center frequency point of the target downlink channel based on the center frequency point of the operating frequency band of the terminal device. For example, the center frequency point of the operating frequency band of the terminal device is determined as the center frequency point of the target downlink channel.

Further, the terminal device may determine the channel bandwidth of the target downlink channel according to the predefined information, or the downlink signaling from the network device.

For example, the network device may modulate the first downlink signal to carry channel bandwidth information of the target downlink channel.

For another example, after the network device and the terminal device establish a connection, the network device may carry the channel bandwidth information of the target downlink channel through a data signal or a control signal.

Embodiment 3: the terminal device may determine the frequency location of the target downlink channel according to the downlink signaling of the network device.

Optionally, when the target downlink channel is a downlink channel after the initial connection is established, the terminal device may determine the frequency location of the target downlink channel according to the downlink signaling of the network device.

In some embodiments, the operation that the terminal device determines a frequency location of a target downlink channel based on the downlink signaling of the network device may include that:

the terminal device determines the center frequency point and/or the channel bandwidth of the target downlink channel according to the downlink signaling of the network device.

That is, the center frequency point and/or the channel bandwidth of the target downlink channel may be configured by the network device.

For example, the terminal device may receive the first downlink signaling and determine the frequency location of the target downlink channel according to the first downlink signaling.

In some embodiments, the first downlink signaling may be used to indicate a channel number of the target downlink channel.

For example, a plurality of downlink channels are predefined, each downlink channel corresponds to a respective center frequency point and a respective channel bandwidth, and each downlink channel is identified by a channel number. The network device may indicate the frequency location of the target downlink channel to the terminal device by indicating the channel number of the target downlink channel.

In other embodiments, the first downlink signaling may be used to indicate the frequency location of the target downlink channel.

For example, the first downlink signaling is used to indicate a location of the center frequency point and/or the channel bandwidth of the target downlink channel.

In still other embodiments, the first downlink signaling is used to indicate a second frequency gap, which may be a frequency gap relative to a specific downlink channel, or a frequency gap relative to a specific frequency point.

As an example, the second frequency gap is a frequency gap of the target downlink channel relative to a downlink channel corresponding to the first downlink signal. For example, the second frequency gap may be the frequency gap of a center frequency point of the target downlink channel relative to the center frequency point of the downlink channel corresponding to the first downlink signal. In this case, the terminal device may determine the location of the center frequency point of the target downlink channel according to the center frequency point of the downlink channel corresponding to the first downlink signal and the second frequency gap.

As yet another example, the second frequency gap is a frequency gap of a center frequency point of the target downlink channel relative to a center frequency point of an operating frequency band of the terminal device. In this case, the terminal device may determine the location of the center frequency point of the target downlink channel according to the center frequency point of the operating frequency band of the terminal device and the second frequency gap.

In still other embodiments, the first downlink signaling is used to indicate a second channel number offset, and the second channel number offset is used to indicate an offset of a channel number of the target downlink channel relative to a channel number of a specific downlink channel. Optionally, the specific downlink channel may be a downlink channel corresponding to the first downlink signal.

In some embodiments, in a case that the network device indicates the channel bandwidth of the target downlink channel, the terminal device may determine the channel bandwidth indicated by the network device as the channel bandwidth of the target downlink channel.

In other embodiments, in a case that the network device does not indicate the channel bandwidth of the target downlink channel, the terminal device may determine the channel bandwidth of the target downlink channel based on predefined information or the channel bandwidth of the downlink channel corresponding to the first downlink signal. For example, the channel bandwidth of the downlink channel corresponding to the first downlink signal may be determined as the channel bandwidth of the target downlink channel.

In some embodiments, the frequency location of the target downlink channel is determined by the network device based on at least one of the following information:
a type of a terminal device, a type of services of the terminal device, an identification (ID) of the terminal device, or first capability information reported by the terminal device. The first capability information is used for indicating information of a downlink channel supported by the terminal device.

In some embodiments, the information of the downlink channel supported by the terminal device includes at least one of:
a frequency location, a channel bandwidth or a channel number of the downlink channel supported by the terminal device.

In some embodiments, the terminal device may report first capability information to the network device, the first capability information being used to indicate information of a downlink channel supported by the terminal device, and the network device may determine the frequency location of the target downlink channel indicated by the first downlink signaling according to the first capability information.

Since different terminal devices may support different target downlink channels, the network device indicates the frequency location of the target downlink channel based on the first capability information reported by the terminal device, which is beneficial to ensure that the terminal device communicates with the network device through a suitable downlink channel.

In some embodiments, a plurality of downlink channels are deployed in the system, and different types of terminal devices are configured to receive downlink signals on different downlink channels, i.e. it may be considered that there is a correspondence between a terminal type and a downlink channel. The network device may determine the target downlink channel based on the type of the terminal device.

Optionally, the type of the terminal device may be divided based on the power source of the terminal device. For example, a passive zero-power terminal is configured on a downlink channel X, a semi-passive terminal is configured on a downlink channel Y, an active zero-power terminal is configured on a downlink channel Z, and the like, where X, Y and Z denote channel numbers of the downlink channel.

Optionally, the type of the terminal device may also be divided based on the first capability information of the terminal device. By configuring terminals with different capabilities to receive downlink signals on different downlink channels, it is beneficial to ensure that terminal devices each communicates with network device through a suitable downlink channel.

In some embodiments, a plurality of downlink channels are deployed in the system. and terminal devices having different UE IDs are configured on different downlink channels, i.e. an UE ID may be considered to have a corresponding relationship with a downlink channel, so that a target downlink channel used by a terminal device to communicate with the network device may be determined based on the UE ID of the terminal device.

Optionally, terminal devices that have the UE ID corresponding to the same downlink channel may be considered to have the same or similar first capability information.

Optionally, the terminal devices that have the UE ID corresponding to the same downlink channel may be regarded as the same type of terminal devices, such as passive zero-power terminals, semi-passive zero-power terminals, active zero-power terminals, etc.

Embodiment 4: the terminal device determines the frequency location of the target downlink channel according to the predefined information.

Optionally, when the target downlink channel is an initial downlink channel, the terminal device may determine the frequency location of the target downlink channel according to the predefined information.

Optionally, when the target downlink channel is a downlink channel after the initial connection is established, the terminal device may determine the frequency location of the target downlink channel according to the predefined information.

In some embodiments, the operation that the terminal device determines a frequency location of a target downlink channel according to the predefined information may include that:

the terminal device determines the center frequency point and/or the channel bandwidth of the target downlink channel according to the predefined information.

That is, the center frequency point and/or the channel bandwidth of the target downlink channel may be predefined.

In some embodiments, the number of downlink channels determined based on predefined information may be one or more.

When a plurality of downlink channels are determined according to the predefined information, the terminal device may select any one of the plurality of downlink channels as a target downlink channel. Optionally, the plurality of downlink channels may be searched to determine the target downlink channel for receiving the downlink signal. For example, the terminal device may determine which of the plurality of downlink channels the network device transmits the downlink signal on according to the characteristics of the signals received on the plurality of downlink channels, and further take the downlink channel on which the network device transmits the downlink channel as the target downlink channel.

It should be understood that when information of the center frequency point of the target downlink channel is not defined, the terminal device may determine the location where the center frequency point of the target downlink channel is located in the manner described in the aforementioned embodiment 1 to embodiment 3. When information of the channel bandwidth of the target downlink channel is not defined, the terminal device may determine the information of the channel bandwidth of the target downlink channel in the manner described in the aforementioned embodiment 1 to embodiment 3.

In the embodiments of the present disclosure, the target uplink channel may be an initial uplink channel for transmitting back scattering signals (or back link signals) during the initial connection between the terminal device and the network device, or the target uplink channel may be an uplink channel after the initial connection, which is used for transmitting back scattering signals after the connection between the terminal device and the network device is established.

In some embodiments, the number of the target uplink channels is one, or may be multiple.

The design of uplink channels in related systems is explained below.

In some embodiments, the uplink channels may be deployed according to capability information, the types of the terminal device and the like, and the terminal devices may be further configured to transmit back scattering signals on different uplink channels.

Optionally, the capability information of the terminal device includes second capability information of the terminal device for indicating information of an uplink channel supported by the terminal device, such as a frequency location, a channel bandwidth, a channel number, etc. Deploying the plurality of uplink channels according to the capability information of the terminal device is beneficial to ensure that the terminal devices with different capabilities transmit back scattering signals on suitable uplink channels.

Optionally, the type of the terminal device, for example, may be divided according to the power source of the terminal device, for example, may be divided into passive zero-power terminal, semi-passive zero-power terminal, active zero-power terminal, etc. Deploying the uplink channels according to the type of the terminal device is beneficial to ensure that the terminal devices with different types transmit back scattering signals on suitable uplink channels.

In some implementations, a plurality of uplink channels are deployed in the system, the plurality of uplink channels have different frequency gaps relative to reference frequency points, e.g. each uplink channel corresponds to a respective center frequency point and a respective channel bandwidth, and each uplink channel is identified by a channel number.

It should be noted that the embodiments of the present disclosure are illustrated only by identifying the uplink channels with the channel numbers as an example. In other embodiments, the uplink channels may also be identified by other identification information, and the present disclosure is not limited thereto.

Optionally, as illustrated in FIG. 9, the reference frequency point may be a center frequency point of the signal for back scattering, i.e. the plurality of uplink channels have different frequency gaps relative to the center frequency point of the signal for back scattering.

It should be understood that the channel bandwidth of each uplink channel may be the same or different.

In some embodiments, if the terminal device obtains a back scattering signal using amplitude shift keying (ASK) modulation or phase shift keying (PSK) modulation, the terminal device may obtain a back scattering signal at a frequency location. In this case, the terminal device may map the back scattering signal to uplink channels designed in the manner of FIG. 9 for transmission.

In other embodiments, if the terminal device obtains back scattering signals using frequency shift keying (FSK) modulation, the terminal device may obtain back scattering signals at two frequency locations. If the terminal device filters out a back scattering signal at one of the frequency locations by filtering, the terminal device may also map the remaining back scattering signal to the uplink channels designed in FIG. 9 for transmission.

In other implementations, a plurality of sets of uplink channels are deployed in the system, each set of uplink channels includes a pair of uplink channels symmetrical relative to a reference frequency point, and the plurality of sets of uplink channels have different frequency gaps relative to the reference frequency point.

That is, the same set of the uplink channels have the same frequency gap relative to the reference frequency point, and the uplink channels of different sets have different frequency gaps relative to the reference frequency point.

It should be understood that each set of uplink channels includes a pair of uplink channels symmetrical relative to a reference frequency point, which may mean that the center frequency points of the pair of uplink channels are symmetrical relative to the reference frequency point. In addition, the pair of uplink channels has the same channel bandwidth.

Optionally, different sets of uplink channels may have the same or different channel bandwidths.

Optionally, the reference frequency point may be the center frequency point of the signal for back scattering.

In some embodiments, each set of uplink channels is identified by a channel number, i.e. the uplink channels in the same set correspond to the same channel number.

As illustrated in FIG. 10, CH1, CH2,..., and CH (n+1), which are symmetrical relative to the center frequency point of the signal for back scattering, constitute a set of uplink channels respectively.

In some embodiments, if the terminal device obtains back scattering signals using FSK modulation, the terminal device may obtain back scattering signals at two frequency locations. In this case, the terminal device may map the back scattering signals at the two frequency locations to a pair of uplink channels designed in the manner of FIG. 10 for transmission.

In some embodiments, the target uplink channel may be determined in the plurality of uplink channels or may also be determined in the plurality of sets of uplink channels. Optionally, in other embodiments, the target uplink channel may also be determined based on other auxiliary information, and the present disclosure is not limited thereto.

To sum up, in some cases, the locations of the uplink channels of the system may be predefined, in which case the center frequency points and channel bandwidths of the uplink channels are determined, for example, the uplink channels may be designed in the manner of FIG. 9 or FIG. 10. In other cases, the locations of the uplink channels of the system may be adjusted flexibly, that is, the uplink channels may not have fixed center frequency points and/or channel bandwidths, in which case the center frequency points and/or channel bandwidths of the uplink channels may be determined according to other auxiliary information.

In some embodiments of the present disclosure, the terminal device may determine that a specific uplink channel is a target uplink channel for transmitting a back scattering signal. Correspondingly, the network device may receive the back scattering signal on the specific uplink channel, that is, the terminal device and the network device have the same understanding of the frequency location for the back scattering signal, so that the normal communication between the terminal device and the network device can be realized.

In some embodiments, the terminal device may determine a target uplink channel for transmitting the back scattering signal according to a preset rule, and correspondingly, the network device may also determine a target uplink channel for receiving the back scattering signal according to the preset rule. Further, the terminal device transmits the back scattering signal on the target uplink channel, and the network device receives the back scattering signal on the target uplink channel, thereby ensuring normal communication between the terminal device and the network device.

In other embodiments, the terminal device may determine the frequency location of the target uplink channel based on the downlink signaling of the network device. Further, the terminal device may transmit a back scattering signal on a frequency location of the target uplink channel indicated by the downlink signaling, and the network device receives the back scattering signal on the target uplink channel indicated by the downlink signaling, thereby ensuring normal communication between the terminal device and the network device.

In some embodiments, the terminal device determines the target uplink channel for transmitting the back scattering signal according to at least one of:
a frequency location of the target downlink channel;
a downlink channel corresponding to a first downlink signal, where the first downlink signal is used for supplying power to the terminal device;
a downlink signaling sent by a network device;
an operating frequency band for the terminal device; or
predefined information.

The method for determining the frequency location of the target downlink channel is referred to the related implementation of the foregoing embodiments and will not be described here.

The determination method of the target uplink channel will be described below in connection with specific embodiments.

Embodiment 5: a frequency location of the target uplink channel is determined according to a frequency location of the target downlink channel.

It should be understood that in the embodiment 5, the frequency location of the target downlink channel may be determined using any determination method in the foregoing embodiment 1 to embodiment 4.

Optionally, when the target uplink channel is an initial uplink channel, the terminal device determines a frequency location of the target uplink channel according to the frequency location of the target downlink channel.

Optionally, when the target uplink channel is a downlink channel after the initial connection is established, the terminal device determines the frequency location of the target uplink channel according to the frequency location of the target downlink channel.

The location relationship between the target uplink channel and the target downlink signal will be described below with reference to embodiment 5-1 and embodiment 5-2. The target uplink channel and the target downlink channel may have other location relationships, and the present disclosure is not limited thereto.

In some embodiments, the operation that the terminal device determines a frequency location of the target uplink channel according to a frequency location of the target downlink channel includes that:
a center frequency point of the target uplink channel is determined according to a center frequency point of the target downlink channel; and/or,
a channel bandwidth of the target uplink channel is determined according to a channel bandwidth of the target downlink channel.

Embodiment 5-1: a frequency location of the target uplink channel is the same as the frequency location of the target downlink channel.

In some embodiments, the frequency location of the target uplink channel being the same as the frequency location of the target downlink channel includes that:
a center frequency point of the target uplink channel is the same as a center frequency point of the target downlink channel.

In this case, a channel bandwidth of the target uplink channel is predefined, or configured by the network device.

In some embodiments, the frequency location of the target uplink channel being the same as the frequency location of the target downlink channel includes that:
a channel number of the target uplink channel is the same as a channel number of the target downlink channel.

That is, the channel number of the target downlink channel may be used as the channel number of the target uplink channel.

In some embodiments, the frequency location of the target uplink channel being the same as the frequency location of the target downlink channel includes that:
a center frequency point of the target uplink channel is the same as a center frequency point of the target downlink channel, and
a channel bandwidth of the target uplink channel is the same as a channel bandwidth of the target downlink channel.

To sum up, the terminal device may determine the center frequency point of the target downlink channel as the center frequency point of the target uplink channel, and determine the channel bandwidth of the target uplink channel according to the predefined information, or the downlink signaling of the network device, or the channel bandwidth of the target downlink channel.

Embodiment 5-2: a third frequency gap is provided between a frequency location of the target uplink channel and the frequency location of the target downlink channel.

In some embodiments, the third frequency gap being provided between the frequency location of the target uplink channel and the frequency location of the target downlink channel includes that:
the third frequency gap is provided between a center frequency point of the target uplink channel and a center frequency point of the target downlink channel.

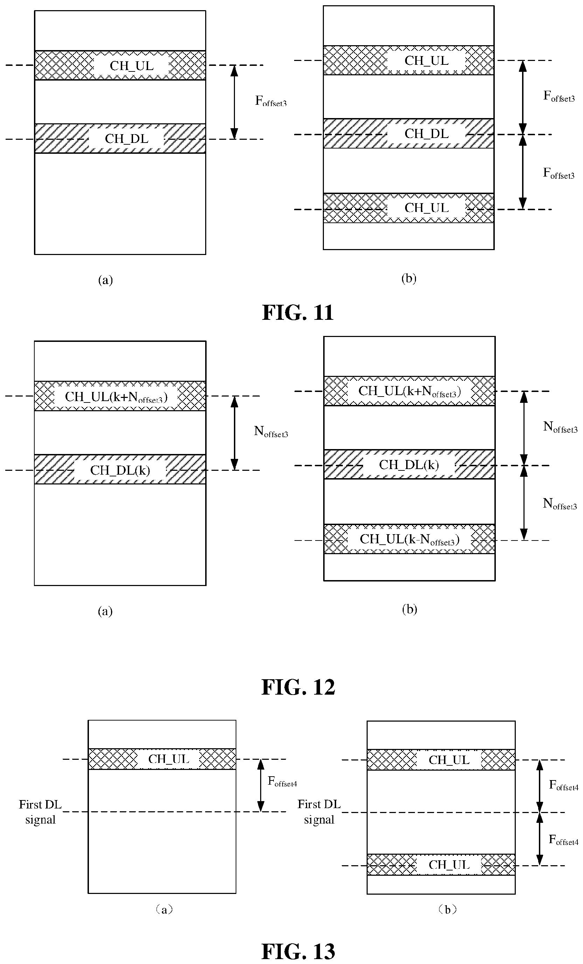

In some embodiments, the third frequency gap being provided between the center frequency point of the target uplink channel and the center frequency point of the target uplink channel may mean that:
a difference between the center frequency point of the target uplink channel (denoted as CH_UL) and the center frequency point of the target downlink channel is the third frequency gap (denoted as F_{offset3}), as illustrated in (a) of FIG. 11. In this case, it may be considered that there is one target uplink channel. For example, when the terminal device modulates the back scattering signal by ASK modulation or PSK modulation, the back scattering signal generated by modulation may be mapped to the one target downlink channel.

In other embodiments, the third frequency gap being provided between the center frequency point of the target uplink channel and the center frequency point of the target downlink channel may mean that:
an absolute value of the difference between the center frequency point of the target uplink channel (denoted as CH_UL) and the center frequency point of the target downlink channel is the third frequency gap (denoted as F_{offset3}), as illustrated in (b) of FIG. 11. In this case, it may be considered that there is a pair of target uplink channels. For example, when the terminal device modulates the back scattering signal by FSK modulation, a pair of back scattering signals generated by modulation may be mapped to the pair of target downlink channels.

In some embodiments, the third frequency gap is configured by the network device or predefined.

As an example, the third frequency gap is configured by the network device through the first downlink signal. For example, the network device may modulate the first downlink signal to carry the information of the third frequency gap.

As an example, the third frequency gap may be configured by the network device through the downlink signaling, and the downlink signaling is used to indicate the third frequency gap.

In the embodiment 5-2, the channel bandwidth of the target uplink channel may be predefined, or configured by the network device, or may be determined according to the channel bandwidth of the target downlink channel, for example, the channel bandwidth of the target downlink channel may be determined as the channel bandwidth of the target uplink channel.

Embodiment 5-3: a third channel number offset is provided between the target uplink channel and the target downlink channel.

In some embodiments, a plurality of uplink channels are predefined, each uplink channel corresponds to a respective center frequency point and a respective channel bandwidth, and each uplink channel is identified by a channel number. Optionally, a plurality of sets of uplink channels are predefined, each set of uplink channel corresponds to a respective center frequency point and a respective channel bandwidth, and each set of uplink channel is identified by a channel number.

In some embodiments, a third channel number offset being provided between the channel number of the target uplink channel and the channel number of the target downlink channel may means that:
a difference between the channel number of the target uplink channel (CH_UL (k + N_{offset3}) and the channel number of the target downlink channel (CH_DL (k)) is the third channel number offset (denoted as N_{offset3}), as illustrated in (a) of FIG. 12. In this case, it may be considered that there is one target uplink channel. For example, when the terminal device modulates the back scattering signal by ASK modulation or PSK modulation, the back scattering signal generated by modulation may be mapped to the one target downlink channel.

In other embodiments, a third channel number offset being provided between the channel number of the target uplink channel and the channel number of the target downlink channel may means that:
an absolute value of the difference between each of the channel numbers of the target uplink channels (CH_UL (k-N_{offset1}) and CH_UL (k + N_{offset3}) respectively) and the channel number of the target downlink channel (CH_DL (k)) is the third channel number offset (denoted as N_{offset3}), as illustrated in (b) of FIG. 12. In this case, it may be considered that there is a pair of target uplink channels. For example, when the terminal device modulates the back scattering signal by FSK modulation, a pair of back scattering signals generated by modulation may be mapped to the pair of target downlink channels.

In some embodiments, the third channel number offset is configured by the network device or predefined.

As an example, the third channel number offset is configured by the network device through the first downlink signal. For example, the network device may modulate the first downlink signal to carry the information of the third channel number offset.

Embodiment 6: a frequency location of the target uplink channel is determined according to a frequency location of the downlink channel corresponding to the first downlink signal.

In other words, the terminal device may determine the frequency location of the target uplink channel based on the frequency location of the first downlink signal.

In some embodiments, the operation that the terminal device determines the target uplink channel according to the downlink channel corresponding to the first downlink signal may include that:
a center frequency point of the target uplink channel is determined according to a center frequency point of the downlink channel corresponding to the first downlink signal; and/or,
a channel bandwidth of the target uplink channel is determined according to a channel bandwidth of the downlink channel corresponding to the first downlink signal.

Optionally, when the target uplink channel is an initial uplink channel, the terminal device determines the frequency location of the target uplink channel according to the frequency location of the downlink channel corresponding to the first downlink signal.

Optionally, when the target uplink channel is an uplink channel after the initial connection is established, the terminal device determines the frequency location of the target uplink channel according to the frequency location of the downlink channel corresponding to the first downlink signal.

The location relationship between the target uplink channel and the downlink channel corresponding to the first downlink signal will be described below with reference to embodiment 6-1 and embodiment 6-2. The target uplink channel and the downlink channel corresponding to the first downlink signal may have other location relationships, and the present disclosure is not limited thereto.

Embodiment 6-1: the target uplink channel is the same as the downlink channel corresponding to the first downlink signal.

In some embodiments, the target uplink channel being the same as the downlink channel corresponding to the first downlink signal includes that:
a center frequency point of the target uplink channel is the same as a center frequency point of the downlink channel corresponding to the first downlink signal.

In this case, a channel bandwidth of the target uplink channel is predefined, or configured by the network device.

For example, if the target uplink channel is an initial downlink channel, a channel bandwidth of the initial downlink channel may be determined according to predefined information.

For example, if the target uplink channel is a downlink channel after the initial connection is established, in this case, a channel bandwidth of the target uplink channel may be determined according to predefined information or the downlink signaling of the network device.

In other embodiments, the target uplink channel being the same as the downlink channel corresponding to the first downlink signal includes that:
a center frequency point of the target uplink channel is the same as a center frequency point of the downlink channel corresponding to the first downlink signal, and
a channel bandwidth of the target uplink channel is the same as a channel bandwidth of the downlink channel corresponding to the first downlink signal.

To sum up, the terminal device may determine the center frequency point of the downlink channel corresponding to the first downlink signal as the center frequency point of the target uplink channel, and determine the channel bandwidth of the target uplink channel according to the predefined information, or the downlink signaling of the network device, or the channel bandwidth of the downlink channel corresponding to the first downlink signal.

Embodiment 6-2: a fourth frequency gap is provided between the target uplink channel and the downlink channel corresponding to the first downlink signal.

In some embodiments, the fourth frequency gap being provided between the target uplink channel and the downlink channel corresponding to the first downlink signal includes that:
the fourth frequency gap is provided between a center frequency point of the target uplink channel and a center frequency point of the downlink channel corresponding to the first downlink signal.

In some embodiments, the fourth frequency gap being provided between the center frequency point of the target uplink channel and the center frequency point of the downlink channel corresponding to the first downlink signal may mean that:
a difference between the center frequency point of the target uplink channel (denoted as CH_DL) and the center frequency point of the downlink channel corresponding to the first downlink signal is the fourth frequency gap (denoted as F_{offset4}), as illustrated in (a) of FIG. 13. In this case, it may be considered that there is one target uplink channel. For example, when the terminal device modulates the back scattering signal by ASK modulation or PSK modulation, the back scattering signal generated by modulation may be mapped to the one target downlink channel.

In other embodiments, the first frequency gap being provided between the center frequency point of the target uplink channel and the center frequency point of the downlink channel corresponding to the first downlink signal may mean that:
an absolute value of the difference between the center frequency point of the target uplink channel (denoted as CH_DL) and the center frequency point of the downlink channel corresponding to the first downlink signal is the fourth frequency gap (denoted as F_{offset4}), as illustrated in (b) of FIG. 13. In this case, it may be considered that there is a pair of target uplink channels. For example, when the terminal device modulates the back scattering signal by FSK modulation, a pair of back scattering signals generated by modulation may be mapped to the pair of target downlink channels.

In some embodiments, the fourth frequency gap is configured by the network device or predefined.

As an example, the fourth frequency gap is configured by the network device through the first downlink signal. For example, the network device may modulate the first downlink signal to carry the information of the fourth frequency gap.

As an example, the fourth frequency gap is configured by the network device through a downlink signaling.

In the embodiment 6-2, the channel bandwidth of the target uplink channel may be predefined, or configured by the network device, or may be determined according to the channel bandwidth of the downlink channel corresponding to the first downlink signal, for example, the channel bandwidth of the downlink channel corresponding to the first downlink signal may be determined as the channel bandwidth of the target uplink channel.

Embodiment 6-3: a fourth channel number offset is provided between the target uplink channel and the target downlink channel.

In some embodiments, a plurality of uplink channels are predefined, each uplink channel corresponds to a respective center frequency point and a respective channel bandwidth, and each uplink channel is identified by a channel number. Optionally, a plurality of sets of uplink channels are predefined, each set of uplink channel corresponds to a respective center frequency point and a respective channel bandwidth, and each set of uplink channel is identified by a channel number.

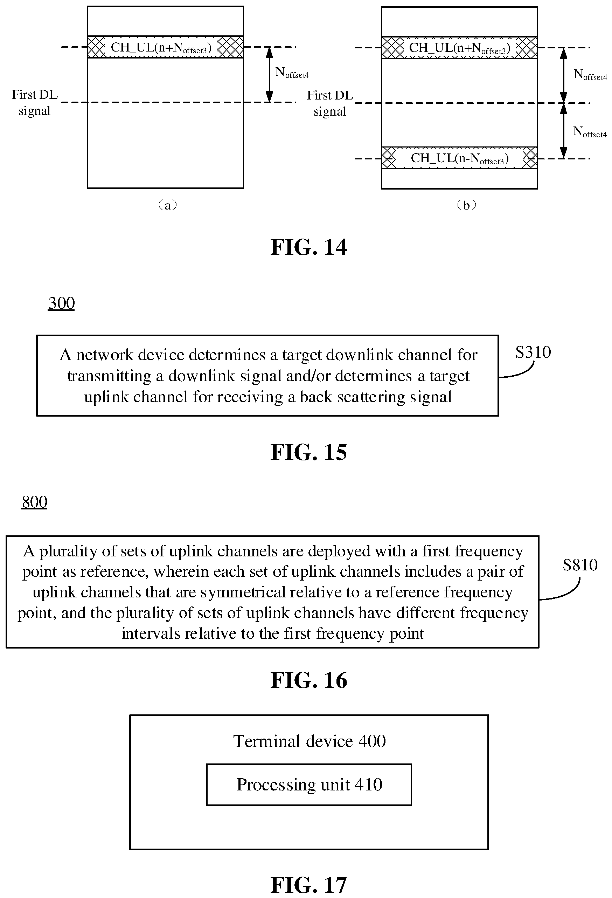

In some embodiments, the fourth channel number offset being provided between the channel number of the target uplink channel and the channel number of the downlink channel corresponding to the first downlink signal may mean that:
a difference between the channel number of the target uplink channel (CH_UL (n + N_{offset4})) and the channel number of the downlink channel (CH_DL (n)) corresponding to the first downlink signal is the fourth channel number offset (denoted as N_{offset4}), as illustrated in (a) of FIG. 14. In this case, it may be considered that there is one target uplink channel. For example, when the terminal device modulates the back scattering signal by ASK modulation or PSK modulation, the back scattering signal generated by modulation may be mapped to the one target downlink channel.

In other embodiments, the fourth channel number offset being provided between the channel number of the target uplink channel and the channel number of the downlink channel corresponding to the first downlink signal may mean that:
an absolute value of the difference between each of the channel number of the target uplink channels (CH_UL (n+ N_{offset4}) and CH_UL (n- N_{offset4}), respectively) and the channel number of the downlink channel (CH_DL (n)) corresponding to the first downlink signal is the fourth channel number offset (denoted as N_{offset4}), as illustrated in (b) of FIG. 14. In this case, it may be considered that there is a pair of target uplink channels. For example, when the terminal device modulates the back scattering signal by FSK modulation, a pair of back scattering signals generated by modulation may be mapped to the pair of target downlink channels.

In some embodiments, the fourth channel number offset is configured by the network device or predefined.

As an example, the fourth channel number offset is configured by the network device through the first downlink signal. For example, the network device may modulate the first downlink signal to carry the information of the fourth channel number offset.

Embodiment 7: the frequency location of the target uplink channel is determined according to the operating frequency band of the terminal device.

Optionally, when the target uplink channel is an initial uplink channel, the terminal device may determine the frequency location of the target uplink channel according to the operating frequency band of the terminal device.

Optionally, when the target uplink channel is an uplink channel after the initial connection is established, the terminal device may determine the frequency location of the target uplink channel according to the operating frequency band of the terminal device.

In some embodiments, the terminal device may determine an uplink channel corresponding to a center frequency point of the operating frequency band of the terminal device as the target uplink channel.

For example, a plurality of uplink channels are deployed in the system, each of which corresponds to a respective center frequency point and a respective channel bandwidth. If the center frequency point of the operating frequency band of the terminal device is located within a first uplink channel in the plurality of uplink channels, the first uplink channel may be determined as the target uplink channel. That is, the center frequency point and the channel bandwidth of the first uplink channel may be determined as the center frequency point and the channel bandwidth of the target uplink channel.

In other embodiments, the terminal device may determine the center frequency point of the target uplink channel based on the center frequency point of the operating frequency band of the terminal device. For example, the center frequency point of the operating frequency band of the terminal device is determined as the center frequency point of the target uplink channel.

Further, the terminal device may determine the channel bandwidth of the target uplink channel according to the predefined information or the downlink signaling of the network device.

For example, the network device may modulate the first downlink signal to carry channel bandwidth information of the target uplink channel.

For another example, after the network device and the terminal device establish a connection, the network device may carry the channel bandwidth information of the target uplink channel through a data signal or a control signal.

Embodiment 8: the terminal device may determine the frequency location of the target uplink channel according to the downlink signaling of the network device.

Optionally, when the target uplink channel is an uplink channel after the initial connection is established, the terminal device may determine the frequency location of the target uplink channel according to the downlink signaling of the network device.

In some embodiments, the operation that the terminal device determines the frequency location of the target uplink channel according to the downlink signaling of the network device may include that:
the terminal device determines the center frequency point and/or the channel bandwidth of the target uplink channel according to the downlink signaling of the network device.

That is, the center frequency point and/or the channel bandwidth of the target uplink channel may be configured by the network device.

For example, the terminal device may receive a second downlink signaling and determine the frequency location of the target uplink channel according to the second downlink signaling.

In some embodiments, the second downlink signaling may be used to indicate a channel number of the target uplink channel.

In some embodiments, a plurality of uplink channels are predefined, each uplink channel corresponds to a respective center frequency point and a respective channel bandwidth, and each uplink channel is identified by a channel number. Optionally, a plurality of sets of uplink channels are predefined, each set of uplink channel corresponds to a respective center frequency point and a respective channel bandwidth, and each set of uplink channel is identified by a channel number. In this case, the network device may indicate the frequency location of the target uplink channel to the terminal device by indicating the channel number of the target uplink channel.

In other embodiments, the second downlink signaling may be used to indicate the frequency location of the target uplink channel.

For example, the second downlink signaling is used to indicate a location of the center frequency point and/or the channel bandwidth of the target uplink channel.

In still other embodiments, the second downlink signaling is used to indicate a fifth frequency gap. The fifth frequency gap may be a frequency gap relative to a specific downlink channel, or a frequency gap relative to a specific frequency point.

As an example, the fifth frequency gap is a frequency gap of the target uplink channel relative to a downlink channel corresponding to the first downlink signal. For example, the fifth frequency gap may be the frequency gap of a center frequency point of the target uplink channel relative to the center frequency point of the downlink channel corresponding to the first downlink signal. In this case, the terminal device may determine the location of the center frequency point of the target uplink channel according to the center frequency point of the downlink channel corresponding to the first downlink signal and the fifth frequency gap.

As another example, the fifth frequency gap is a frequency gap of a center frequency point of the target uplink channel relative to a center frequency point of the target downlink channel. In this case, the terminal device may determine the location of the center frequency point of the target uplink channel according to the center frequency point of the target downlink channel and the fifth frequency gap.

As yet another example, the fifth frequency gap is a frequency gap of a center frequency point of the target uplink channel relative to a center frequency point of an operating frequency band of the terminal device. In this case, the terminal device may determine the location of the center frequency point of the target uplink channel according to the center frequency point of the operating frequency band of the terminal device and the fifth frequency gap.

In still other embodiments, the second downlink signaling is used to indicate a fifth channel number offset, the fifth channel number offset is used to indicate an offset of a channel number of the target uplink channel relative to a channel number of a specific downlink channel. Optionally, the specific downlink channel may be a downlink channel corresponding to the first downlink signal, or the target downlink channel.

In some embodiments, in a case that the network device indicates the channel bandwidth of the target uplink channel, the terminal device may determine the channel bandwidth indicated by the network device as the channel bandwidth of the target uplink channel.

In other embodiments, in a case that the network device does not indicate the channel bandwidth of the target uplink channel, the terminal device may determine the channel bandwidth of the target uplink channel based on predefined information, or the channel bandwidth of the downlink channel corresponding to the first downlink signal, or the channel bandwidth of the target downlink channel.

In some embodiments, the frequency location of the target uplink channel is determined by the network device based on at least one of:
a type of a terminal device, a type of services of the terminal device, an identification (ID) of the terminal device, or second capability information reported by the terminal device.

In some embodiments, the second capability information is used to indicate information of an uplink channel supported by the terminal device, and the network device may determine the frequency location of the target uplink channel indicated by the second downlink signaling according to the second capability information.

In some embodiments, the information of the uplink channel supported by the terminal device includes at least one of:
a frequency location, a channel bandwidth or a channel number of the uplink channel supported by the terminal device.

Since different terminal devices may support different uplink channels, the network device indicates the frequency location of the target uplink channel based on the second capability information reported by the terminal device, which is beneficial to ensure that the terminal device communicates with the network device through a suitable uplink channel.

In some embodiments, the system is configured with a plurality of uplink channels, and different types of terminal devices are configured on different uplink channels, i.e. it may be considered that there is a correspondence between the terminal types and the uplink channels, so that the network device may determine the target uplink channel based on the type of the terminal device.

Optionally, the type of the terminal device may be divided based on the power source of the terminal device. For example, a passive zero-power terminal is configured on an uplink channel L, a semi-passive terminal is configured on an uplink channel M, an active zero-power terminal is configured on an uplink channel N, and the like, where L, M and N are integers and indicate the number of the uplink channels.

Optionally, the type of the terminal device may also be divided based on the second capability information of the terminal device. By configuring terminals with different capabilities to transmit the back scattering signal on different uplink channels, it is beneficial to ensure that terminal device communicates with network device through a suitable uplink channel.

In some embodiments, the system is configured with a plurality of uplink channels, and terminal devices having different UE IDs are configured on different uplink channels, i.e. an UE ID may be considered to have a corresponding relationship with an uplink channel, so that a target uplink channel used by the terminal device to communicate with the network device may be determined based on the UE ID of the terminal device.

Optionally, terminal devices that have the UE ID corresponding to the same uplink channel may be considered to have the same or similar second capability information.

Optionally, the terminal devices that have the UE ID corresponding to the same uplink channel may be regarded as the same type of terminal device, such as passive zero-power terminal, semi-passive zero-power terminal, active zero-power terminal, etc.

Embodiment 9: the terminal device determines the frequency location of the target uplink channel according to the predefined information.

Optionally, when the target uplink channel is an initial uplink channel, the terminal device may determine the frequency location of the target uplink channel according to the predefined information.

Optionally, when the target uplink channel is an uplink channel after the initial connection is established, the terminal device may determine the frequency location of the target uplink channel according to the predefined information.

In some embodiments, the operation that the terminal device determines a frequency location of the target uplink channel according to the predefined information may include that:
the terminal device determines the center frequency point and/or the channel bandwidth of the target uplink channel according to the predefined information.

That is, the center frequency point and/or the channel bandwidth of the target uplink channel may be predefined.

In some embodiments, the number of uplink channels determined based on predefined information may be one or more.

It should be understood that when information of the center frequency point of the target uplink channel is not defined, the terminal device may determine the location where the center frequency point of the target uplink channel is located in the manner described in the aforementioned embodiment 5 to embodiment 8. When information of the channel bandwidth of the target uplink channel is not defined, the terminal device may determine the information of the channel bandwidth of the target uplink channel in the manner described in the aforementioned embodiment 5 to embodiment 8.

It should be noted that determination of the target downlink channel and the determination of the target uplink channel may be implemented independently or in combination, and the present disclosure is not limited thereto.

For example, for the initial downlink channel and the initial uplink channel, the terminal device may determine the target downlink channel according to a downlink channel corresponding to the power sourcing signal and determine the target uplink channel according to the downlink channel corresponding to the power sourcing signal, or the terminal device may determine the target downlink channel according to the predefined information and determine the target uplink channel according to the predefined information.

For another example, for the downlink channel and the uplink channel after the initial connection, the terminal device may determine the initial uplink channel as the uplink channel after the initial connection according to determining the initial downlink channel as the downlink channel after the initial connection, that is, the terminal device continues using the initial uplink channel and the initial downlink channel after the connection is established for communciation.

For another example, for the downlink channel and the uplink channel after the initial connection, the terminal device may determine the target downlink channel according to the downlink signaling and determine the target uplink channel according to the downlink signaling, which is beneficial to avoid the problem that the load over the initial downlink channel and the initial uplink channel are too high due to the continuous communication using the initial downlink channel and the initial uplink channel after the connection is established.

Combining the above embodiments, the terminal device may determine the target downlink channel for receiving the downlink signal according to the preset rule or the downlink signaling, and correspondingly, the network device may also determine the target downlink channel for transmitting the downlink signal according to the preset rule or indication of the downlink signaling, which is beneficial to ensure the normal communication between the terminal device and the network device through the suitable downlink channel.

The terminal device may determine the target uplink channel for transmitting the back scattering signal according to the preset rule or the downlink signaling, and correspondingly, the network device may also determine the target uplink channel for receiving the back scattering signal according to the preset rule or the downlink signaling, which is beneficial to ensure the normal communication between the terminal device and the network device through the suitable uplink channel.

The method of wireless communication according to an embodiment of the present disclosure is described in detail above from the perspective of a terminal device with reference to FIG. 6 to FIG. 14, and the method of wireless communication according to another embodiment of the present disclosure is described in detail below from the perspective of a network device with reference to FIG. 15. It should be understood that the descriptions on the network device side and the descriptions on the terminal device side correspond to each other, and similar descriptions may be referred to above and will not be repeated here to avoid repetition.

FIG. 15 is a schematic flowchart of a method 300 of wireless communication according to another embodiment of the present disclosure, and the method 300 may be performed by a network device in the communication system illustrated in FIG. 1. As illustrated in FIG. 15, the method 300 includes the following operation.

At block S310, the network device determines a target downlink channel for transmitting a downlink signal, and/or determines a target uplink channel for receiving a back scattering signal.

It should be understood that the related descriptions of the terminal device, the network device, the downlink signal, the target downlink channel, and the target uplink channel in the method 300 refer to the related descriptions in the method 200 and are not repeated here for the sake of brevity.

In some embodiments of the present disclosure, the network device may determine a target downlink channel for transmitting the downlink signal according to a preset rule, and correspondingly, the terminal device may also determine a target downlink channel for receiving the downlink signal according to the preset rule. Further, the network device transmits the downlink signal on the target downlink channel, and the terminal device receives the downlink signal on the target downlink channel, thereby ensuring that the terminal device communicates with the network device through the suitable downlink channel.

In some embodiments, the operation that the network device determines the target downlink channel for transmitting the downlink signal includes that:
the target downlink channel for transmitting the downlink signal is determined according to at least one of:
a downlink channel corresponding to a first downlink signal, where the first downlink signal is used for supplying power to the terminal device;
an operating frequency band for the terminal device; or
predefined information.

It should be understood that reference for the specific implementation of the network device determining the frequency location of the target downlink channel according to the downlink channel corresponding to the first downlink signal in the method 300 may be made to the relevant description in embodiment 1 of the method 200, and will not be repeated here for the sake of brevity.

It should be understood that reference for the specific implementation of the network device determining the frequency location of the target downlink channel according to the operating frequency band of the terminal device in the method 300 may be made to the relevant description in embodiment 2 of the method 200, and will not be repeated here for the sake of brevity.

It should be understood that reference for the specific implementation of the network device determining the frequency location of the target downlink channel according to the operating frequency band of the terminal device in the method 300 may be made to the relevant description in embodiment 4 of the method 200, and will not be repeated here for the sake of brevity.

In some embodiments, the target downlink channel is the same as the downlink channel corresponding to the first downlink signal.

In some embodiments, the target downlink channel being the same as the downlink channel corresponding to the first downlink signal includes that:
a center frequency point of the target downlink channel is the same as a center frequency point of the downlink channel corresponding to the first downlink signal.

In some embodiments, a first frequency gap is provided between the target downlink channel and the downlink channel corresponding to the first downlink signal.

In some embodiments, the first frequency gap being provided between the target downlink channel and the downlink channel corresponding to the first downlink signal includes that:
the first frequency gap is provided between a center frequency point of the target downlink channel and a center frequency point of the downlink channel corresponding to the first downlink signal.

In some embodiments, the first frequency gap is predefined.

In some embodiments, a location of the target downlink channel is predefined.

In some embodiments, the location of the target downlink channel being predefined includes that: a location of a center frequency point of the target downlink channel is predefined.

In some embodiments, the target downlink channel is a channel where a center frequency point of the operating frequency band for the terminal device is located.

In other embodiments of the present disclosure, the network device may also transmit a first downlink signaling to the terminal device for the terminal device to determine the frequency location of the target downlink channel. The frequency location of the target downlink channel is determined by the network device, e.g. by the network device according to a preset rule.

It should be understood that reference for the specific description of the first downlink signaling is made to the relevant description of the first downlink signaling in method 200 and is not repeated here for the sake of brevity.

In some embodiments, the first downlink signaling is used for indicating a second frequency gap, where the second frequency gap is a frequency gap of the target downlink channel relative to the downlink channel corresponding to the first downlink signal, and the first downlink signal is used for supplying power to the terminal device.

In some embodiments, the frequency location of the target downlink channel is determined according to first capability information reported by the terminal device, and the first capability information is used for indicating information of a downlink channel supported by the terminal device.

In some embodiments, the information of the downlink channel supported by the terminal device includes at least one of:
a frequency location, a channel bandwidth or a channel number of the downlink channel supported by the terminal device.

In some embodiments of the present disclosure, the network device may determine a target uplink channel for receiving the back scattering signal according to a preset rule, and correspondingly, the terminal device may also determine a target uplink channel for transmitting the back scattering signal according to the preset rule. Further, the terminal device transmits the back scattering signal on the target uplink channel, and the network device receives the back scattering signal on the target uplink channel, thereby ensuring normal communication between the terminal device and the network device.

In some embodiments, the operation that the target uplink channel for receiving the back scattering signal is determined includes that:
the target uplink channel for receiving the back scattering signal is determined according to at least one of:
a frequency location of the target downlink channel;
a downlink channel corresponding to a first downlink signal, where the first downlink signal is used for supplying power to the terminal device;
an operating frequency band for the terminal device; or
predefined information.

It should be understood that reference for the specific implementation of the network device determining the frequency location of the target uplink channel according to the target downlink channel in the method 300 may be made to the relevant description in embodiment 5 of the method 200 and will not be repeated here for the sake of brevity.

It should be understood that reference for the specific implementation of the network device determining the frequency location of the target uplink channel according to the downlink channel corresponding to the first downlink signal in the method 300 may be made to the relevant description in embodiment 6 of the method 200, and will not be repeated here for the sake of brevity.

It should be understood that reference for the specific implementation of the network device determining the frequency location of the target downlink channel according to the operating frequency band of the terminal device in the method 300 may be made to the relevant description in embodiment 7 of the method 200, and will not be repeated here for the sake of brevity.

It should be understood that reference for the specific implementation of the network device determining the frequency location of the target downlink channel according to the operating frequency band of the terminal device in the method 300 may be made to the relevant description in embodiment 9 of the method 200, and will not be repeated here for the sake of brevity.

In some embodiments, a frequency location of the target uplink channel is the same as the frequency location of the target downlink channel.

In some embodiments, the frequency location of the target uplink channel being the same as the frequency location of the target downlink channel includes that:
a center frequency point of the target uplink channel is the same as a center frequency point of the target downlink channel.

In some embodiments, a third frequency gap is provided between a frequency location of the target uplink channel and the frequency location of the target downlink channel.

In some embodiments, the third frequency gap being provided between the frequency location of the target uplink channel and the frequency location of the target downlink channel includes that:
the third frequency gap is provided between a center frequency point of the target uplink channel and a center frequency point of the target downlink channel.

In some embodiments, the third frequency gap is predefined.

In some embodiments, the frequency location of the target uplink channel is the same as a frequency location of the downlink channel corresponding to the first downlink signal.

In some embodiments, the frequency location of the target uplink channel being the same as the frequency location of the downlink channel corresponding to the first downlink signal includes that:
a center frequency point of the target uplink channel is the same as a center frequency point of the downlink channel corresponding to the first downlink signal.

In some embodiments, a fourth frequency gap is provided between a frequency location of the target uplink channel and a frequency location of the downlink channel corresponding to the first downlink signal.

In some embodiments, the fourth frequency gap being provided between the frequency location of the target uplink channel and the frequency location of the downlink channel corresponding to the first downlink signal includes that:

the fourth frequency gap is provided between a center frequency point of the target uplink channel and a center frequency point of the downlink channel corresponding to the first downlink signal.

In some embodiments, the fourth frequency gap is predefined.

In other embodiments of the present disclosure, the network device may also transmit a second downlink signaling to the terminal device for the terminal device to determine the frequency location of the target uplink channel. The frequency location of the target uplink channel is determined by the network device, e.g. according to a preset rule.

It should be understood that reference for the specific description of the second downlink signaling is made to the relevant description of the second downlink signaling in method 200 and is not repeated here for the sake of brevity.

In some embodiments, the second downlink signaling is used for indicating a fifth frequency gap, where the fifth frequency gap is a frequency gap of the target uplink channel relative to the target downlink channel or the downlink channel corresponding to the first downlink signal, and the first downlink signal is used for supplying power to a terminal device.

In some embodiments, the frequency location of the target uplink channel is determined by the network device based on at least one of the following information:
a type of a terminal device, a type of services of the terminal device, an identification (ID) of the terminal device, or second capability information reported by the terminal device, the second capability information being used for indicating information of an uplink channel supported by the terminal device.

In some embodiments, the information of the uplink channel supported by the terminal device includes at least one of:
a frequency location, a channel bandwidth or a channel number of the uplink channel supported by the terminal device.

Combining the above embodiments, the network device may determine the target downlink channel for transmitting the downlink signal according to the preset rule or the downlink signaling, and correspondingly, the terminal device may also determine the target downlink channel for receiving the downlink signal according to the preset rule or the downlink signaling, which is beneficial to ensure the normal communication between the terminal device and the network device through the suitable downlink channel.

The network device may determine the target uplink channel for receiving the back scattering signal according to the preset rule or the downlink signaling, and correspondingly, the terminal device may also determine the target uplink channel for transmitting the back scattering signal according to the preset rule or the downlink signaling, which is beneficial to ensure the normal communication between the terminal device and the network device through the suitable uplink channel.

FIG. 16 is a schematic flowchart of a method of wireless communication 800 according to another embodiment of the present disclosure. As illustrated in FIG. 16, the method 800 includes the following operation.

At block S810, a plurality of sets of uplink channels are deployed with the first frequency point as reference, wherein each set of uplink channels includes a pair of uplink channels symmetrical relative to a reference frequency point, and the plurality of sets of uplink channels have different frequency gaps relative to the first frequency point.

It should be understood that the method 800 may be performed by a network device, or by an entity having management control function in the communication system, or may be a design manner of a predefined uplink channel, which is not limited herein.

In some embodiments, the first frequency point may be the center frequency point of the signal for back scattering. FIG. 10 is a schematic diagram of the plurality of sets of uplink channels.

It should be understood that each set of uplink channels includes a pair of uplink channels symmetrical relative to a reference frequency point. That means, the center frequency points of the pair of uplink channels are symmetrical relative to the reference frequency point.

Optionally, the channel bandwidths of different sets of uplink channels may be the same or different.

In some embodiments, the plurality of sets of uplink channels are deployed according to the type of terminal device.

In some embodiments, the plurality of sets of uplink channels are deployed in accordance with second capability information of the terminal device, the second capability information being used for indicating information uplink channels supported by the terminal device.

In some embodiments, the information of the uplink channel supported by the terminal device includes at least one of:

a frequency location, a channel bandwidth or a channel number of the uplink channel supported by the terminal device.

It should be understood that in some embodiments, the target uplink channel in method 200 and method 300 may be determined in the plurality of sets of uplink channels. Reference is made to the related descriptions in method 200 and method 300 for the specific determination method and will not be repeated here for the sake of brevity.

The method embodiments of the present disclosure have been described in detail above with reference to FIG. 6 to FIG. 16, and the apparatus embodiments of the present disclosure have been described in detail below with reference to FIG. 16 to FIG. 21. It should be understood that the apparatus embodiments and the method embodiments correspond to each other, and reference for similar descriptions of the apparatus embodiments may be made to the method embodiments.

FIG. 16 illustrates a schematic block diagram of a terminal device 400 according to an embodiment of the present disclosure. As illustrated in FIG. 16, the terminal device 400 includes a processing unit 410.

The processing unit 410 is configured to determine a target downlink channel for receiving a downlink signal, and/or determine a target uplink channel for transmitting a back scattering signal.

In some embodiments, the processing unit 410 is specifically configured to:
determine the target downlink channel for receiving the downlink signal according to at least one of:
a downlink channel corresponding to a first downlink signal, where the first downlink signal is used for supplying power to the terminal device;
an operating frequency band for the terminal device;
predefined information; or
a downlink signaling sent by a network device.

In some embodiments, the target downlink channel is the same as the downlink channel corresponding to the first downlink signal.

In some embodiments, the target downlink channel being the same as the downlink channel corresponding to the first downlink signal includes that:
a center frequency point of the target downlink channel is the same as a center frequency point of the downlink channel corresponding to the first downlink signal.

In some embodiments, a first frequency gap is provided between the target downlink channel and the downlink channel corresponding to the first downlink signal.

In some embodiments, the first frequency gap being provided between the target downlink channel and the downlink channel corresponding to the first downlink signal includes that:
the first frequency gap is provided between a center frequency point of the target downlink channel and a center frequency point of the downlink channel corresponding to the first downlink signal.

In some embodiments, the first frequency gap is configured by the network device or predefined.

In some embodiments, the first frequency gap is configured by the network device through the first downlink signal.

In some embodiments, a location of the target downlink channel is predefined.

In some embodiments, the location of the target downlink channel being predefined includes:
a center frequency point of the target downlink channel is predefined.

In some embodiments, the target downlink channel is a channel where a center frequency point of the operating frequency band for the terminal device is located.

In some embodiments, the downlink signaling sent by the network device includes a first downlink signaling, the first downlink signaling is used for indicating a frequency location of the target downlink channel, or the first downlink signaling is used for indicating a second frequency gap, where the second frequency gap is a frequency gap of the target downlink channel relative to the downlink channel corresponding to the first downlink signal.

In some embodiments, the frequency location of the target downlink channel indicated by the first downlink signaling is determined according to first capability information reported by the terminal device, and the first capability information is used for indicating information of a downlink channel supported by the terminal device.

In some embodiments, the information of the downlink channel supported by the terminal device includes at least one of:
a frequency location, a channel bandwidth or a channel number of the downlink channel supported by the terminal device.

In some embodiments, a channel bandwidth of the target downlink channel is predefined, or configured by the network device, or determined according to a channel bandwidth of the downlink channel corresponding to the first downlink signal.

In some embodiments, the processing unit 410 is further configured to:
determine the target uplink channel for transmitting the back scattering signal according to at least one of:
a frequency location of the target downlink channel;
a downlink channel corresponding to a first downlink signal, where the first downlink signal is used for supplying power to the terminal device;
a downlink signaling sent by a network device;
an operating frequency band for the terminal device; or
predefined information.

In some embodiments, a frequency location of the target uplink channel is the same as the frequency location of the target downlink channel.

In some embodiments, the frequency location of the target uplink channel being the same as the frequency location of the target downlink channel includes that:
a center frequency point of the target uplink channel is the same as a center frequency point of the target downlink channel.

In some embodiments, a third frequency gap is provided between a frequency location of the target uplink channel and the frequency location of the target downlink channel.

In some embodiments, the third frequency gap being provided between the frequency location of the target uplink channel and the frequency location of the target downlink channel includes that:
the third frequency gap is provided between a center frequency point of the target uplink channel and a center frequency point of the target downlink channel.

In some embodiments, the third frequency gap is configured by the network device or predefined.

In some embodiments, the frequency location of the target uplink channel is the same as a frequency location of the downlink channel corresponding to the first downlink signal.

In some embodiments, the frequency location of the target uplink channel being the same as the frequency location of the downlink channel corresponding to the first downlink signal includes that:
a center frequency point of the target uplink channel is the same as a center frequency point of the downlink channel corresponding to the first downlink signal.

In some embodiments, a fourth frequency gap is provided between a frequency location of the target uplink channel and a frequency location of the downlink channel corresponding to the first downlink signal.

In some embodiments, the fourth frequency gap being provided between the frequency location of the target uplink channel and the frequency location of the downlink channel corresponding to the first downlink signal includes that:
the fourth frequency gap is provided between a center frequency point of the target uplink channel and a center frequency point of the downlink channel corresponding to the first downlink signal.

In some embodiments, the fourth frequency gap is configured by the network device or predefined.

In some embodiments, the downlink signaling sent by the network device includes a second downlink signaling, the second downlink signaling is used for indicating a frequency location of the target uplink channel, or the second downlink signaling is used for indicating a fifth frequency gap, where the fifth frequency gap is a frequency gap of the target uplink channel relative to the target downlink channel or the downlink channel corresponding to the first downlink signal.

In some embodiments, the target uplink channel is determined by the network device based on at least one of:
a type of the terminal device, a type of services of the terminal device, an identification (ID) of the terminal device, or second capability information reported by the terminal device, the second capability information being used for indicating information of an uplink channel supported by the terminal device.

In some embodiments, the information of the uplink channel supported by the terminal device includes at least one of:
a frequency location, a channel bandwidth or a channel number of the uplink channel supported by the terminal device.

In some embodiments, the terminal device 400 further includes a communication unit, configured to receive a second downlink signal on the target downlink channel.

In some embodiments, the network device 400 further includes a communication unit, configured to transmit the back scattering signal on the target uplink channel.

Optionally, in some embodiments, the communication unit may be a communication interface or a transceiver, or an input-output interface of a communication chip or a system-on-chip. The processing unit may be one or more processors.

It should be understood that the terminal device 400 according to the embodiments of the present disclosure may correspond to the terminal device in the method embodiments of the present disclosure, and the above and other operations and/or functions of the individual units in the terminal device 400 are designed to implement the respective flow of the terminal device in the method 200 illustrated in FIG. 6 to FIG. 14, respectively, which will not be repeated here for the sake of brevity.

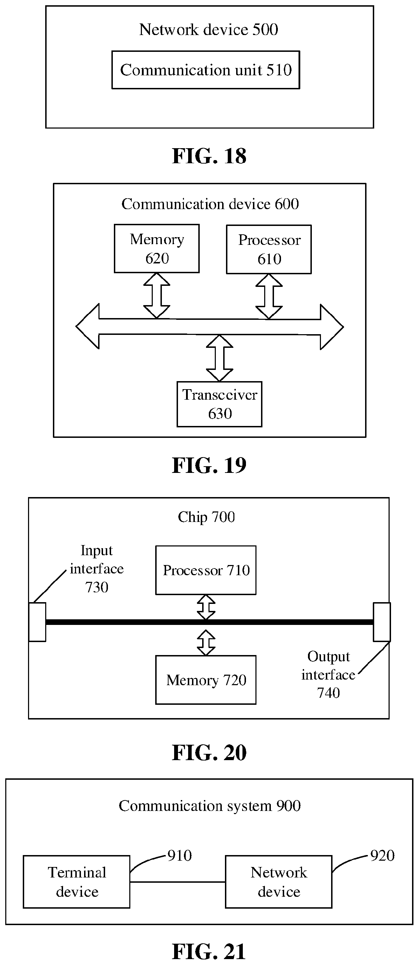

FIG. 18 is a schematic block diagram of a network device according to an embodiment of the present disclosure. As illustrated in FIG. 18, the network device 500 includes a processing unit 510.

The processing unit 510 is configured to determine a target downlink channel for transmitting a downlink signal, and/or determine a target uplink channel for receiving a back scattering signal.

In some embodiments, the processing unit 510 is further configured to:
determine the target downlink channel for transmitting the downlink signal according to at least one of:
a downlink channel corresponding to a first downlink signal, where the first downlink signal is used for supplying power to the terminal device;
an operating frequency band for the terminal device; or
predefined information.

In some embodiments, the target downlink channel is the same as the downlink channel corresponding to the first downlink signal.

In some embodiments, the target downlink channel being the same as the downlink channel corresponding to the first downlink signal includes that:
a center frequency point of the target downlink channel is the same as a center frequency point of the downlink channel corresponding to the first downlink signal.

In some embodiments, a first frequency gap is provided between the target downlink channel and the downlink channel corresponding to the first downlink signal.

In some embodiments, the first frequency gap being provided between the target downlink channel and the downlink channel corresponding to the first downlink signal includes that:
the first frequency gap is provided between a center frequency point of the target downlink channel and a center frequency point of the downlink channel corresponding to the first downlink signal.

In some embodiments, the first frequency gap is predefined.

In some embodiments, a location of the target downlink channel is predefined.

In some embodiments, the location of the target downlink channel being predefined includes that:
a location of a center frequency point of the target downlink channel is predefined.

In some embodiments, the target downlink channel is a channel where a center frequency point of the operating frequency band for the terminal device is located.

In some embodiments, the network device further includes a communication unit.

The communication unit is configured to transmit a first downlink signaling, the first downlink signaling being used for determining a frequency location of the target downlink channel.

In some embodiments, the first downlink signaling is used for indicating a second frequency gap, where the second frequency gap is a frequency gap of the target downlink channel relative to the downlink channel corresponding to the first downlink signal, and the first downlink signal is used for supplying power to the terminal device.

In some embodiments, the frequency location of the target downlink channel is determined according to first capability information reported by the terminal device, and the first capability information is used for indicating information of a downlink channel supported by the terminal device.

In some embodiments, the information of the downlink channel supported by the terminal device includes at least one of:
a frequency location, a channel bandwidth or a channel number of the downlink channel supported by the terminal device.

In some embodiments, the processing unit 510 is further configured to:
determine the target uplink channel for receiving the back scattering signal according to at least one of:
a frequency location of the target downlink channel;
a downlink channel corresponding to a first downlink signal, where the first downlink signal is used for supplying power to the terminal device;
an operating frequency band for the terminal device; or
predefined information.

In some embodiments, a frequency location of the target uplink channel is the same as the frequency location of the target downlink channel.

In some embodiments, the frequency location of the target uplink channel being the same as the frequency location of the target downlink channel includes that:
a center frequency point of the target uplink channel is the same as a center frequency point of the target downlink channel.

In some embodiments, a third frequency gap is provided between a frequency location of the target uplink channel and the frequency location of the target downlink channel.

In some embodiments, the third frequency gap being provided between the frequency location of the target uplink channel and the frequency location of the target downlink channel includes that:
the third frequency gap is provided between a center frequency point of the target uplink channel and a center frequency point of the target downlink channel.

In some embodiments, the third frequency gap is predefined.

In some embodiments, the frequency location of the target uplink channel is the same as a frequency location of the downlink channel corresponding to the first downlink signal.

In some embodiments, the frequency location of the target uplink channel being the same as the frequency location of the downlink channel corresponding to the first downlink signal includes that:
a center frequency point of the target uplink channel is the same as a center frequency point of the downlink channel corresponding to the first downlink signal.

In some embodiments, a fourth frequency gap is provided between a frequency location of the target uplink channel and a frequency location of the downlink channel corresponding to the first downlink signal.

In some embodiments, the fourth frequency gap being provided between the frequency location of the target uplink channel and the frequency location of the downlink channel corresponding to the first downlink signal includes that:
the fourth frequency gap is provided between a center frequency point of the target uplink channel and a center frequency point of the downlink channel corresponding to the first downlink signal.

In some embodiments, the fourth frequency gap is predefined.

In some embodiments, the network device further includes a communication unit.

The communication unit is configured to transmit a second downlink signaling, the second downlink signaling being used for determining a frequency location of the target uplink channel.

In some embodiments, the second downlink signaling is used for indicating a fifth frequency gap, where the fifth frequency gap is a frequency gap of the target uplink channel relative to the target downlink channel or the downlink channel corresponding to the first downlink signal, and the first downlink signal is used for supplying power to a terminal device.

In some embodiments, the frequency location of the target uplink channel is determined by the network device based on at least one of the following information:
a type of a terminal device, a type of services of the terminal device, an identification (ID) of the terminal device, or second capability information reported by the terminal device, the second capability information being used for indicating information of an uplink channel supported by the terminal device.

In some embodiments, the information of the uplink channel supported by the terminal device includes at least one of: a frequency location, a channel bandwidth or a channel number of the uplink channel supported by the terminal device.

Optionally, in some embodiments, the communication unit may be a communication interface or a transceiver, or an input-output interface of a communication chip or a system-on-chip. The processing unit may be one or more processors.

It should be understood that the network device 500 according to the embodiments of the present disclosure may correspond to the network device in the method embodiments of the present disclosure, and the above and other operations and/or functions of the individual units in the network device 500 are designed to implement the respective flow of the network device in the method illustrated in FIG. 3 to FIG. 15 respectively, which will not be repeated here for the sake of brevity.

FIG. 19 is a schematic structural diagram of a communication device 600 provided by an embodiment of the present disclosure. As illustrated in FIG. 19, the communication device 600 includes a processor 610 that may call and execute a computer program from a memory to implement the method in the embodiments of the present disclosure.

Optionally, as illustrated in FIG. 19, the communication device 600 may also include a memory 620. The processor 610 may call and execute a computer program from the memory 620 to implement the method in the embodiments of the present disclosure.

The memory 620 may be a separate device independent of the processor 610 or may be integrated in the processor 610.

As illustrated in FIG. 13, the communication device 600 may also include a transceiver 630. The processor 610 may control the transceiver 630 to communicate with other devices, and in particular send information or data to other devices, or receive information or data sent by other devices.

The transceiver 630 may include a transmitter and a receiver. The transceiver 630 may further include antennas. The number of antennas may be one or more.

Optionally, the communication device 600 may be specifically a network device of the embodiments of the present disclosure, and the communication device 600 may implement corresponding processes implemented by the network device in various methods of the embodiments of the present disclosure, which will not be repeated here for the sake of brevity.

Optionally, the communication device 600 may be specifically a mobile terminal/terminal device of the embodiments of the present disclosure, and the communication device 600 may implement corresponding processes implemented by the mobile terminal/the terminal device in various methods of the embodiments of the present disclosure, which will not be repeated here for the sake of brevity.

FIG. 20 is a schematic structural diagram of a chip according to an embodiment of the present disclosure. As illustrated in FIG. 20, a chip 700 includes a processor 710 that may call and execute a computer program from a memory to implement the method in the embodiments of the present disclosure.

Optionally, as illustrated in FIG. 20, the chip 700 may also include a memory 720. The processor 710 may call and execute a computer program from the memory 720 to implement the method in the embodiments of the present disclosure.

The memory 720 may be a separate device independent of the processor 710 or may be integrated in the processor 710.

Optionally, the chip 700 may also include an input interface 730. The processor 710 may control the input interface 730 to communicate with other devices or chips, and in particular to obtain information or data sent by other devices or chips.

Optionally, the chip 700 may also include an output interface 740. The processor 710 may control the output interface 740 to communicate with other devices or chips, and in particular output information or data to other devices or chips.

Optionally, the chip may be applied to a network device of the embodiments of the present disclosure, and the chip may implement corresponding processes implemented by the network device in various methods of the embodiments of the present disclosure, which will not be repeated here for the sake of brevity.

Optionally, the chip may be applied to a mobile terminal/terminal device of embodiments of the present disclosure, and the chip may implement corresponding processes implemented by the mobile terminal/the terminal device in the respective methods of the embodiments of the present disclosure, which will not be repeated here for the sake of brevity.

It should be understood that the chip referred to in the embodiments of the present disclosure may also be referred to as a system-level chip, a system chip, a chip system or a system-on-chip or the like.

FIG. 21 is a schematic block diagram of a communication system 900 provided by an embodiment of the present disclosure. As illustrated in FIG. 21, the communication system 900 includes a terminal device 910 and a network device 920.

The terminal device 910 may be configured to implement corresponding functions implemented by the terminal device in the above method, and the network device 920 may be configured to implement corresponding functions implemented by the network device in the above method, which will not be repeated here for the sake of brevity.

It should be understood that the processor may be an integrated circuit chip having signal processing capability. In implementation, the operations of the above method embodiments may be accomplished by integrated logic circuitry of hardware in processor or instructions in the form of software. The processor may be a general purpose processor, a digital signal processor (DSP), an application specific integrated circuit (ASIC), a field programmable gate array (FPGA) or other programmable logic devices, discrete gates or transistor logic devices, or discrete hardware components. The processor may implement or execute the methods, operations and logic diagrams disclosed in the embodiments of the present disclosure. The general purpose processor may be a microprocessor or any conventional processor. The operations of the method disclosed in the embodiments of the present disclosure may be directly embodied as being executed by a hardware decoding processor or being executed by the hardware and software modules in a decoding processor. The software modules may be located in a storage medium mature in the art, such as a random access memory, a flash memory, a read-only memory, a programmable read-only memory or an electrically erasable programmable memory, a register, etc. The storage medium is located in the memory, and the processor reads the information in the memory to complete the operations of the aforementioned method in conjunction with its hardware.

It will be appreciated that the memory in the embodiments of the present disclosure may be a volatile memory or a non-volatile memory, or may also include both a volatile memory and a non-volatile memory. The non-volatile memory may be a read-only memory (ROM), a programmable ROM (PROM), an erasable PROM (EPROM), an electrically EPROM (EPROM) or a flash memory. The volatile memory may be a random access memory (RAM), which serves as an external cache. By way of illustration but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM). It should be noted that the memory in the systems and methods described herein is intended to include, but is not limited to, these memories and any other suitable types of memory.

It should be understood that the memory described above is exemplary but not limiting. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), etc. That is, the memory in the embodiments of the present disclosure is intended to include, but is not limited to, these memories and any other suitable types of memory.

In an embodiment of the present disclosure, there is further provided a computer-readable storage medium, configured to store a computer program.

Optionally, the computer-readable storage medium may be applied to the network device of the embodiments of the present disclosure, and the computer program causes a computer to implement corresponding processes implemented by the network device in the methods of the embodiments of the present disclosure, which will not be repeated here for the sake of brevity.

Optionally, the computer-readable storage medium may be applied to the mobile terminal/terminal device of the embodiments of the present disclosure, and the computer program causes a computer to implement corresponding processes implemented by the mobile terminal/terminal device in the methods of the embodiments of the present disclosure, which will not be repeated here for the sake of brevity.

In an embodiment of the present disclosure, there is further provided a computer program product, which includes computer program instructions.

Optionally, the computer program product may be applied to the network device of the embodiments of the present disclosure, and the computer program instructions cause a computer to implement corresponding processes implemented by the network device in the methods of the embodiments of the present disclosure, which will not be repeated here for the sake of brevity.

Optionally, the computer program product may be applied to the mobile terminal/terminal device of the embodiments of the present disclosure, and the computer program instructions cause a computer to implement corresponding processes implemented by the mobile terminal/terminal device in the methods of the embodiments of the present disclosure, which will not be repeated here for the sake of brevity.

In an embodiment of the present disclosure, there is further provided a computer program.

Optionally, the computer program may be applied to the network device of the embodiments of the present disclosure, the computer program, when running on a computer, causes the computer to implement corresponding processes implemented by the network device in the methods of the embodiments of the present disclosure, which will not be repeated here for the sake of brevity.

Optionally, the computer program may be applied to the mobile terminal/terminal device of the embodiments of the present disclosure, the computer program, when running on a computer, causes the computer to implement corresponding processes implemented by the mobile terminal/terminal device in the methods of the embodiments of the present disclosure, which will not be repeated here for the sake of brevity.

Those of ordinary skill in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

In several embodiments provided herein, it should be understood that the disclosed systems, apparatuses and methods may be implemented in other manners. For example, the above-described embodiments of the apparatus is only schematic, for example, the division of the units is only a logical function division, and in practice, there may be another division manner, for example, multiple units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure.

In addition, each functional unit in each embodiment of the present disclosure may be integrated in one processing unit, each unit may exist physically alone, or two or more units may be integrated in one unit.

When the functions are realized in the form of software functional units and sold or used as an independent product, they may be stored in a computer readable storage medium. Based on such an understanding, the technical solutions according to the disclosure, in essence or the part contributing to the prior art, or part of the technical solutions may be embodied in the form of a software product. The computer software product is stored in a storage medium, and includes several instructions so that a computer device (which may be a personal computer, a server, a network device or the like) implements all or part of the method according to respective embodiments of the disclosure. The aforementioned storage medium includes various media capable of storing a program code such as a USB disk, a mobile hard drive disk, a read-only memory (ROM), a random access memory (RAM), a magnetic disk or an optical disk.

The above is only the specific implementations of the present disclosure, but the scope of protection of the present disclosure is not limited thereto. Any person skilled in the art may easily think of changes or substitutions within the technical scope disclosed in the present disclosure, which should be covered within the protection scope of the present disclosure. Therefore, the scope of protection of the present disclosure shall be subject to the scope of protection of the claims.

## Claims

1. A method of wireless communication, comprising:
determining, by a terminal device, a target downlink channel for receiving a downlink signal, and/or determining, by the terminal device, a target uplink channel for transmitting a back scattering signal.

2. The method of claim 1, wherein determining, by the terminal device, the target downlink channel for receiving the downlink signal comprises:
determining the target downlink channel for receiving the downlink signal according to at least one of:
a downlink channel corresponding to a first downlink signal, wherein the first downlink signal is used for supplying power to the terminal device;
an operating frequency band for the terminal device;
predefined information; or
a downlink signaling sent by a network device.

3. The method of claim 2, wherein the target downlink channel is the same as the downlink channel corresponding to the first downlink signal.

4. The method of claim 3, wherein the target downlink channel being the same as the downlink channel corresponding to the first downlink signal comprises that:
a center frequency point of the target downlink channel is the same as a center frequency point of the downlink channel corresponding to the first downlink signal.

5. The method of claim 2, wherein a first frequency gap is provided between the target downlink channel and the downlink channel corresponding to the first downlink signal.

6. The method of claim 5, wherein the first frequency gap being provided between the target downlink channel and the downlink channel corresponding to the first downlink signal comprises that:
the first frequency gap is provided between a center frequency point of the target downlink channel and a center frequency point of the downlink channel corresponding to the first downlink signal.

7. The method of claim 5 or 6, wherein the first frequency gap is configured by the network device or predefined.

8. The method of claim 7, wherein the first frequency gap is configured by the network device through the first downlink signal.

9. The method of claim 2, wherein a location of the target downlink channel is predefined.

10. The method of claim 9, wherein the location of the target downlink channel being predefined comprises that: a center frequency point of the target downlink channel is predefined.

11. The method of claim 2, wherein the target downlink channel is a channel where a center frequency point of the operating frequency band for the terminal device is located.

12. The method of claim 2, wherein the downlink signaling sent by the network device comprises a first downlink signaling, the first downlink signaling being used for indicating a frequency location of the target downlink channel, or the first downlink signaling being used for indicating a second frequency gap, wherein the second frequency gap is a frequency gap of the target downlink channel relative to the downlink channel corresponding to the first downlink signal.

13. The method of claim 12, wherein the frequency location of the target downlink channel indicated by the first downlink signaling is determined according to first capability information reported by the terminal device, the first capability information being used for indicating information of a downlink channel supported by the terminal device.

14. The method of claim 13, wherein the information of the downlink channel supported by the terminal device comprises at least one of:
a frequency location, a channel bandwidth or a channel number of the downlink channel supported by the terminal device.

15. The method of any one of claims 2 to 14, wherein a channel bandwidth of the target downlink channel is predefined, or configured by the network device, or determined according to a channel bandwidth of the downlink channel corresponding to the first downlink signal.

16. The method of any one of claims 1 to 15, wherein determining the target uplink channel for transmitting the back scattering signal comprises:
determining the target uplink channel for transmitting the back scattering signal according to at least one of:
a frequency location of the target downlink channel;
a downlink channel corresponding to a first downlink signal, wherein the first downlink signal is used for supplying power to the terminal device;
a downlink signaling sent by a network device;
an operating frequency band for the terminal device; or
predefined information.

17. The method of claim 16, wherein a frequency location of the target uplink channel is the same as the frequency location of the target downlink channel.

18. The method of claim 17, wherein the frequency location of the target uplink channel being the same as the frequency location of the target downlink channel comprises that:
a center frequency point of the target uplink channel is the same as a center frequency point of the target downlink channel.

19. The method of claim 16, wherein a third frequency gap is provided between a frequency location of the target uplink channel and the frequency location of the target downlink channel.

20. The method of claim 19, wherein the third frequency gap being provided between the frequency location of the target uplink channel and the frequency location of the target downlink channel comprises that:
the third frequency gap is provided between a center frequency point of the target uplink channel and a center frequency point of the target downlink channel.

21. The method of claim 19 or 20, wherein the third frequency gap is configured by the network device or predefined.

22. The method of claim 17, wherein the frequency location of the target uplink channel is the same as a frequency location of the downlink channel corresponding to the first downlink signal.

23. The method of claim 22, wherein the frequency location of the target uplink channel being the same as the frequency location of the downlink channel corresponding to the first downlink signal comprises that:
a center frequency point of the target uplink channel is the same as a center frequency point of the downlink channel corresponding to the first downlink signal.

24. The method of claim 16, wherein a fourth frequency gap is provided between a frequency location of the target uplink channel and a frequency location of the downlink channel corresponding to the first downlink signal.

25. The method of claim 24, wherein the fourth frequency gap being provided between the frequency location of the target uplink channel and the frequency location of the downlink channel corresponding to the first downlink signal comprises that:
the fourth frequency gap is provided between a center frequency point of the target uplink channel and a center frequency point of the downlink channel corresponding to the first downlink signal.

26. The method of claim 24 or 25, wherein the fourth frequency gap is configured by the network device or predefined.

27. The method of claim 16, wherein the downlink signaling sent by the network device comprises a second downlink signaling, the second downlink signaling being used for indicating a frequency location of the target uplink channel, or the second downlink signaling being used for indicating a fifth frequency gap, wherein the fifth frequency gap is a frequency gap of the target uplink channel relative to the target downlink channel or the downlink channel corresponding to the first downlink signal.

28. The method of claim 27, wherein the target uplink channel is determined by the network device based on at least one of:
a type of the terminal device, a type of services of the terminal device, an identification (ID) of the terminal device, or second capability information reported by the terminal device, the second capability information being used for indicating information of an uplink channel supported by the terminal device.

29. The method of claim 28, wherein the information of the uplink channel supported by the terminal device comprises at least one of:
a frequency location, a channel bandwidth or a channel number of the uplink channel supported by the terminal device.

30. The method of any one of claims 1 to 29, further comprising:
receiving, by the terminal device, a second downlink signal on the target downlink channel.

31. The method of any one of claims 1 to 30, further comprising:
transmitting, by the terminal device, the back scattering signal on the target uplink channel.

32. A method of wireless communication, comprising:
determining, by a network device, a target downlink channel for transmitting a downlink signal and/or determining, by the network device, a target uplink channel for receiving a back scattering signal.

33. The method of claim 32, wherein determining, by the network device, the target downlink channel for transmitting the downlink signal comprises:
determining the target downlink channel for transmitting the downlink signal according to at least one of:
a downlink channel corresponding to a first downlink signal, wherein the first downlink signal is used for supplying power to a terminal device;
an operating frequency band for the terminal device; or
predefined information.

34. The method of claim 33, wherein the target downlink channel is the same as the downlink channel corresponding to the first downlink signal.

35. The method of claim 34, wherein the target downlink channel being the same as the downlink channel corresponding to the first downlink signal comprises that:
a center frequency point of the target downlink channel is the same as a center frequency point of the downlink channel corresponding to the first downlink signal.

36. The method of claim 33, wherein a first frequency gap is provided between the target downlink channel and the downlink channel corresponding to the first downlink signal.

37. The method of claim 36, wherein the first frequency gap being provided between the target downlink channel and the downlink channel corresponding to the first downlink signal comprises that:
the first frequency gap is provided between a center frequency point of the target downlink channel and a center frequency point of the downlink channel corresponding to the first downlink signal.

38. The method of claim 36 or 37, wherein the first frequency gap is predefined.

39. The method of claim 33, wherein a location of the target downlink channel is predefined.

40. The method of claim 39, wherein the location of the target downlink channel being predefined comprises: a location of a center frequency point of the target downlink channel is predefined.

41. The method of claim 33, wherein the target downlink channel is a channel where a center frequency point of the operating frequency band for the terminal device is located.

42. The method of any one of claims 32 to 41, further comprising:
transmitting, by the network device, a first downlink signaling, the first downlink signaling being used for determining a frequency location of the target downlink channel.

43. The method of claim 42, wherein the first downlink signaling is used for indicating a second frequency gap, wherein the second frequency gap is a frequency gap of the target downlink channel relative to the downlink channel corresponding to the first downlink signal, and the first downlink signal is used for supplying power to a terminal device.

44. The method of claim 42 or 43, wherein the frequency location of the target downlink channel is determined according to first capability information reported by a terminal device, and the first capability information is used for indicating information of a downlink channel supported by the terminal device.

45. The method of claim 44, wherein the information of the downlink channel supported by the terminal device comprises at least one of:
a frequency location, a channel bandwidth or a channel number of the downlink channel supported by the terminal device.

46. The method of any one of claims 32 to 45, wherein determining the target uplink channel for receiving the back scattering signal comprises:
determining the target uplink channel for receiving the back scattering signal according to at least one of:
a frequency location of the target downlink channel;
a downlink channel corresponding to a first downlink signal, wherein the first downlink signal is used for supplying power to a terminal device;
an operating frequency band for the terminal device; or
predefined information.

47. The method of claim 46, wherein a frequency location of the target uplink channel is the same as the frequency location of the target downlink channel.

48. The method of claim 47, wherein the frequency location of the target uplink channel being the same as the frequency location of the target downlink channel comprises that:
a center frequency point of the target uplink channel is the same as a center frequency point of the target downlink channel.

49. The method of claim 46, wherein a third frequency gap is provided between a frequency location of the target uplink channel and the frequency location of the target downlink channel.

50. The method of claim 49, wherein the third frequency gap being provided between the frequency location of the target uplink channel and the frequency location of the target downlink channel comprises that:
the third frequency gap is provided between a center frequency point of the target uplink channel and a center frequency point of the target downlink channel.

51. The method of claim 49 or 50, wherein the third frequency gap is predefined.

52. The method of claim 46, wherein the frequency location of the target uplink channel is the same as a frequency location of the downlink channel corresponding to the first downlink signal.

53. The method of claim 52, wherein the frequency location of the target uplink channel being the same as the frequency location of the downlink channel corresponding to the first downlink signal comprises that:
a center frequency point of the target uplink channel is the same as a center frequency point of the downlink channel corresponding to the first downlink signal.

54. The method of claim 46, wherein a fourth frequency gap is provided between a frequency location of the target uplink channel and a frequency location of the downlink channel corresponding to the first downlink signal.

55. The method of claim 54, wherein the fourth frequency gap being provided between the frequency location of the target uplink channel and the frequency location of the downlink channel corresponding to the first downlink signal comprises that:
the fourth frequency gap is provided between a center frequency point of the target uplink channel and a center frequency point of the downlink channel corresponding to the first downlink signal.

56. The method of claim 54 or 55, wherein the fourth frequency gap is predefined.

57. The method of any one of claims 32 to 56, further comprising:
transmitting, by the network device, a second downlink signaling, the second downlink signaling being used for determining a frequency location of the target uplink channel.

58. The method of claim 57, wherein the second downlink signaling is used for indicating a fifth frequency gap, wherein the fifth frequency gap is a frequency gap of the target uplink channel relative to the target downlink channel or a downlink channel corresponding to a first downlink signal, and the first downlink signal is used for supplying power to a terminal device.

59. The method of claim 57 or 58, wherein the frequency location of the target uplink channel is determined by the network device based on at least one of the following information:
a type of a terminal device, a type of services of the terminal device, an identification (ID) of the terminal device, or second capability information reported by the terminal device, the second capability information being used for indicating information of an uplink channel supported by the terminal device.

60. The method of claim 59, wherein the information of the uplink channel supported by the terminal device comprises at least one of:
a frequency location, a channel bandwidth or a channel number of the uplink channel supported by the terminal device.

61. A terminal device, comprising:
a processing unit, configured to determine a target downlink channel for receiving a downlink signal, and/or determine a target uplink channel for transmitting a back scattering signal.

62. The terminal device of claim 61, wherein the processing unit is specifically used to:
determine the target downlink channel for receiving the downlink signal according to at least one of:
a downlink channel corresponding to a first downlink signal, wherein the first downlink signal is used for supplying power to the terminal device;
an operating frequency band for the terminal device;
predefined information; or
a downlink signaling sent by a network device.

63. The terminal device of claim 62, wherein the target downlink channel is the same as the downlink channel corresponding to the first downlink signal.

64. The terminal device of claim 63, wherein the target downlink channel being the same as the downlink channel corresponding to the first downlink signal comprises that:
a center frequency point of the target downlink channel is the same as a center frequency point of the downlink channel corresponding to the first downlink signal.

65. The terminal device of claim 62, wherein a first frequency gap is provided between the target downlink channel and the downlink channel corresponding to the first downlink signal.

66. The terminal device of claim 65, wherein the first frequency gap being provided between the target downlink channel and the downlink channel corresponding to the first downlink signal comprises that:
the first frequency gap is provided between a center frequency point of the target downlink channel and a center frequency point of the downlink channel corresponding to the first downlink signal.

67. The terminal device of claim 65 or 66, wherein the first frequency gap is configured by the network device or predefined.

68. The terminal device of claim 67, wherein the first frequency gap is configured by the network device through the first downlink signal.

69. The terminal device of claim 62, wherein a location of the target downlink channel is predefined.

70. The terminal device of claim 69, wherein the location of the target downlink channel being predefined comprises: a center frequency point of the target downlink channel is predefined.

71. The terminal device of claim 62, wherein the target downlink channel is a channel where a center frequency point of the operating frequency band for the terminal device is located.

72. The terminal device of claim 62, wherein the downlink signaling sent by the network device comprises a first downlink signaling, the first downlink signaling being used for indicating a frequency location of the target downlink channel, or the first downlink signaling being used for indicating a second frequency gap, wherein the second frequency gap is a frequency gap of the target downlink channel relative to the downlink channel corresponding to the first downlink signal.

73. The terminal device of claim 72, wherein the frequency location of the target downlink channel indicated by the first downlink signaling is determined according to first capability information reported by the terminal device, the first capability information being used for indicating information of a downlink channel supported by the terminal device.

74. The terminal device of claim 73, wherein the information of the downlink channel supported by the terminal device comprises at least one of:
a frequency location, a channel bandwidth or a channel number of the downlink channel supported by the terminal device.

75. The terminal device of any one of claims 62 to 74, wherein a channel bandwidth of the target downlink channel is predefined, or configured by the network device, or determined according to a channel bandwidth of the downlink channel corresponding to the first downlink signal.

76. The terminal device of any one of claims 61 to 75, wherein the processing unit is further configured to:
determine the target uplink channel for transmitting the back scattering signal according to at least one of:
a frequency location of the target downlink channel;
a downlink channel corresponding to a first downlink signal, wherein the first downlink signal is used for supplying power to the terminal device;
a downlink signaling sent by a network device;
an operating frequency band for the terminal device; or
predefined information.

77. The terminal device of claim 76, wherein a frequency location of the target uplink channel is the same as the frequency location of the target downlink channel.

78. The terminal device of claim 77, wherein the frequency location of the target uplink channel being the same as the frequency location of the target downlink channel comprises that:
a center frequency point of the target uplink channel is the same as a center frequency point of the target downlink channel.

79. The terminal device of claim 76, wherein a third frequency gap is provided between a frequency location of the target uplink channel and the frequency location of the target downlink channel.

80. The terminal device of claim 79, wherein the third frequency gap being provided between the frequency location of the target uplink channel and the frequency location of the target downlink channel comprises that:
the third frequency gap is provided between a center frequency point of the target uplink channel and a center frequency point of the target downlink channel.

81. The terminal device of claim 79 or 80, wherein the third frequency gap is configured by the network device or predefined.

82. The terminal device of claim 77, wherein the frequency location of the target uplink channel is the same as a frequency location of the downlink channel corresponding to the first downlink signal.

83. The terminal device of claim 82, wherein the frequency location of the target uplink channel being the same as the frequency location of the downlink channel corresponding to the first downlink signal comprises that:
a center frequency point of the target uplink channel is the same as a center frequency point of the downlink channel corresponding to the first downlink signal.

84. The terminal device of claim 76, wherein a fourth frequency gap is provided between a frequency location of the target uplink channel and a frequency location of the downlink channel corresponding to the first downlink signal.

85. The terminal device of claim 84, wherein the fourth frequency gap being provided between the frequency location of the target uplink channel and the frequency location of the downlink channel corresponding to the first downlink signal comprises that:
the fourth frequency gap is provided between a center frequency point of the target uplink channel and a center frequency point of the downlink channel corresponding to the first downlink signal.

86. The terminal device of claim 84 or 85, wherein the fourth frequency gap is configured by the network device or predefined.

87. The terminal device of claim 86, wherein the downlink signaling sent by the network device comprises a second downlink signaling, the second downlink signaling being used for indicating a frequency location of the target uplink channel, or the second downlink signaling being used for indicating a fifth frequency gap, wherein the fifth frequency gap is a frequency gap of the target uplink channel relative to the target downlink channel or the downlink channel corresponding to the first downlink signal.

88. The terminal device of claim 87, wherein the target uplink channel is determined by the network device based on at least one of:
a type of the terminal device, a type of services of the terminal device, an identification (ID) of the terminal device, or second capability information reported by the terminal device, the second capability information being used for indicating information of an uplink channel supported by the terminal device.

89. The terminal device of claim 88, wherein the information of the uplink channel supported by the terminal device comprises at least one of:
a frequency location, a channel bandwidth or a channel number of the uplink channel supported by the terminal device.

90. The terminal device of any one of claims 61 to 89, further comprising:
a communication unit, configured to receive a second downlink signal on the target downlink channel.

91. The terminal device of any one of claims 61 to 90, further comprising:
a communication unit, configured to transmit the back scattering signal on the target uplink channel.

92. A network device, comprising:
a processing unit, configured to determine a target downlink channel for transmitting a downlink signal and/or determine a target uplink channel for receiving a back scattering signal.

93. The network device of claim 92, wherein the processing unit is further configured to:
determine the target downlink channel for transmitting the downlink signal according to at least one of:
a downlink channel corresponding to a first downlink signal, wherein the first downlink signal is used for supplying power to a terminal device;
an operating frequency band for the terminal device; or
predefined information.

94. The network device of claim 93, wherein the target downlink channel is the same as the downlink channel corresponding to the first downlink signal.

95. The network device of claim 94, wherein the target downlink channel being the same as the downlink channel corresponding to the first downlink signal comprises that:
a center frequency point of the target downlink channel is the same as a center frequency point of the downlink channel corresponding to the first downlink signal.

96. The network device of claim 93, wherein a first frequency gap is provided between the target downlink channel and the downlink channel corresponding to the first downlink signal.

97. The network device of claim 96, wherein the first frequency gap being provided between the target downlink channel and the downlink channel corresponding to the first downlink signal comprises that:
the first frequency gap is provided between a center frequency point of the target downlink channel and a center frequency point of the downlink channel corresponding to the first downlink signal.

98. The network device of claim 96 or 97, wherein the first frequency gap is predefined.

99. The network device of claim 93, wherein a location of the target downlink channel is predefined.

100. The network device of claim 99, wherein the location of the target downlink channel being predefined comprises that: a location of a center frequency point of the target downlink channel is predefined.

101. The network device of claim 93, wherein the target downlink channel is a channel where a center frequency point of the operating frequency band for the terminal device is located.

102. The network device of any one of claims 32 to 41, further comprising:
a communication unit, configured to transmit a first downlink signaling, the first downlink signaling being used for determining a frequency location of the target downlink channel.

103. The network device of claim 102, wherein the first downlink signaling is used for indicating a second frequency gap, wherein the second frequency gap is a frequency gap of the target downlink channel relative to the downlink channel corresponding to the first downlink signal, and the first downlink signal is used for supplying power to a terminal device.

104. The network device of claim 102 or 103, wherein the frequency location of the target downlink channel is determined according to first capability information reported by a terminal device, and the first capability information is used for indicating information of a downlink channel supported by the terminal device.

105. The network device of claim 104, wherein the information of the downlink channel supported by the terminal device comprises at least one of:
a frequency location, a channel bandwidth or a channel number of the downlink channel supported by the terminal device.

106. The network device of any one of claims 92 to 105, wherein the processing unit is further configured to:
determine the target uplink channel for receiving the back scattering signal according to at least one of:
a frequency location of the target downlink channel;
a downlink channel corresponding to a first downlink signal, wherein the first downlink signal is used for supplying power to a terminal device;
an operating frequency band for the terminal device; or
predefined information.

107. The network device of claim 106, wherein a frequency location of the target uplink channel is the same as the frequency location of the target downlink channel.

108. The network device of claim 107, wherein the frequency location of the target uplink channel being the same as the frequency location of the target downlink channel comprises that:
a center frequency point of the target uplink channel is the same as a center frequency point of the target downlink channel.

109. The network device of claim 106, wherein a third frequency gap is provided between a frequency location of the target uplink channel and the frequency location of the target downlink channel.

110. The network device of claim 109, wherein the third frequency gap being provided between the frequency location of the target uplink channel and the frequency location of the target downlink channel comprises that:
the third frequency gap is provided between a center frequency point of the target uplink channel and a center frequency point of the target downlink channel.

111. The network device of claim 109 or 110, wherein the third frequency gap is predefined.

112. The network device of claim 106, wherein the frequency location of the target uplink channel is the same as a frequency location of the downlink channel corresponding to the first downlink signal.

113. The network device of claim 112, wherein the frequency location of the target uplink channel being the same as the frequency location of the downlink channel corresponding to the first downlink signal comprises that:
a center frequency point of the target uplink channel is the same as a center frequency point of the downlink channel corresponding to the first downlink signal.

114. The network device of claim 106, wherein a fourth frequency gap is provided between a frequency location of the target uplink channel and a frequency location of the downlink channel corresponding to the first downlink signal.

115. The network device of claim 114, wherein the fourth frequency gap being provided between the frequency location of the target uplink channel and the frequency location of the downlink channel corresponding to the first downlink signal comprises that:
the fourth frequency gap is provided between a center frequency point of the target uplink channel and a center frequency point of the downlink channel corresponding to the first downlink signal.

116. The network device of claim 114 or 115, wherein the fourth frequency gap is predefined.

117. The network device of any one of claims 92 to 116, further comprising:
a communication unit, configured to transmit a second downlink signaling, the second downlink signaling being used for determining a frequency location of the target uplink channel.

118. The network device of claim 117, wherein the second downlink signaling is used for indicating a fifth frequency gap, wherein the fifth frequency gap is a frequency gap of the target uplink channel relative to the target downlink channel or a downlink channel corresponding to a first downlink signal, the first downlink signal being used for supplying power to a terminal device.

119. The network device of claim 117 or 118, wherein the frequency location of the target uplink channel is determined by the network device based on at least one of the following information:
a type of a terminal device, a type of services of the terminal device, an identification (ID) of the terminal device, or second capability information reported by the terminal device, the second capability information being used for indicating information of an uplink channel supported by the terminal device.

120. The network device of claim 119, wherein the information of the uplink channel supported by the terminal device comprises at least one of:
a frequency location, a channel bandwidth or a channel number of the uplink channel supported by the terminal device.

121. A terminal device, comprising a processor and a memory for storing a computer program, wherein the processor is configured to call and execute the computer program stored in the memory to implement the method of any one of claims 1 to 31, or the method of any one of claims 22 to 32.

122. A chip, comprising a processor, configured to call and execute a computer program from a memory to cause a device equipped with the chip to implement the method of any one of claims 1 to 21, or the method of any one of claims 1 to 31.

123. A computer-readable storage medium, configured to store a computer program that causes a computer to implement the method of any one of claims 1 to 31, or the method of any one of claims 1 to 31.

124. A computer program product, comprising computer program instructions that cause a computer to implement the method of any one of claims 1 to 21, or the method of any one of claims 1 to 31.

125. A computer program, which causes a computer to implement the method of any one of claims 1 to 31, or the method of any one of claims 22 to 32.

126. A network device, comprising a processor and a memory for storing a computer program, wherein the processor is configured to call and execute the computer program stored in the memory to implement the method of any one of claims 32 to 60.

127. A chip, comprising a processor, configured to call and execute a computer program from a memory to cause a device equipped with the chip to implement the method of any one of claims 32 to 60.

128. A computer-readable storage medium, configured to store a computer program that causes a computer to implement the method of any one of claims 32 to 60.

129. A computer program product, comprising computer program instructions that cause a computer to implement the method of any one of claims 32 to 60.

130. A computer program, which causes a computer to implement the method of any one of claims 32 to 60.
